(19) Europäisches Patentamt
European Patent Office
Office européen des brevets

(11) **EP 4 131 069 A1**

(12) **EUROPEAN PATENT APPLICATION**
published in accordance with Art. 153(4) EPC

(43) Date of publication:
**08.02.2023 Bulletin 2023/06**

(51) International Patent Classification (IPC):
***G06K 9/62*** (1980.01)

(21) Application number: **21787843.8**

(22) Date of filing: **08.04.2021**

(86) International application number:
**PCT/CN2021/086001**

(87) International publication number:
**WO 2021/208799 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.04.2020 CN 202010308439**

(71) Applicant: **HUAWEI TECHNOLOGIES CO., LTD.
Shenzhen, Guangdong 518129 (CN)**

(72) Inventors:
• **YE, Junjian
Shenzhen, Guangdong 518129 (CN)**

• **ZHANG, Keli
Shenzhen, Guangdong 518129 (CN)**
• **ZHANG, Xi
Shenzhen, Guangdong 518129 (CN)**
• **CAI, Ruichu
Guangzhou, Guangdong 510006 (CN)**
• **CHEN, Jiawei
Guangzhou, Guangdong 510006 (CN)**

(74) Representative: **Maiwald GmbH
Engineering
Elisenhof
Elisenstrasse 3
80335 München (DE)**

(54) **TRANSFER MODEL TRAINING METHOD AND APPARATUS AND FAULT DETECTION METHOD AND APPARATUS**

(57)    A transfer model training method and apparatus and a fault detection method and apparatus are provided, and relate to the field of artificial intelligence. The transfer model training method includes: obtaining to-be-processed data (301), where the to-be-processed data includes unlabeled data from a target domain and labeled data from a source domain; obtaining a plurality of data segments of each dimension of data in the to-be-processed data (302), where the plurality of data segments are not the same; and training a transfer model based on the plurality of data segments, to obtain a trained transfer model (303). According to the method, both an overall feature of the to-be-processed data and a local feature hidden between the data segments can be obtained. This can effectively improve accuracy of data processing.

```
┌─────────────────────────────────────────────────────────────┐
│         301: Obtain to-be-processed data                      │
└─────────────────────────────────────────────────────────────┘
                              │
┌─────────────────────────────────────────────────────────────┐
│  302: Obtain a plurality of data segments of each dimension   │
│         of data in the to-be-processed data                   │
└─────────────────────────────────────────────────────────────┘
                              │
┌─────────────────────────────────────────────────────────────┐
│  303: Train a transfer model based on the plurality of data   │
│       segments, to obtain a trained transfer model            │
└─────────────────────────────────────────────────────────────┘
```

FIG. 3

EP 4 131 069 A1

**Description**

This application claims priority to Chinese Patent Application No. 202010308439.6, filed with the China National Intellectual Property Administration on April 18, 2020 and entitled "TRANSFER MODEL TRAINING METHOD AND APPARATUS, AND FAULT DETECTION METHOD AND APPARATUS", which is incorporated herein by reference in its entirety.

**TECHNICAL FIELD**

This application relates to the field of artificial intelligence, and in particular, to a transfer model training method and apparatus, and a fault detection method and apparatus.

**BACKGROUND**

In the field of artificial intelligence, a model is usually required to implement an artificial intelligence method. When a model in an application scenario needs to be transferred to another scenario, a model applicable to the new scenario needs to be established. In the process, a common method is using a pre-trained model (a model in the original application scenario) as an initial model of a new model (a model in the new application scenario), to use pre-trained models that have consumed massive time resources and computing resources. Therefore, transfer learning (transfer learning) emerges. In other words, transfer learning can transfer learned powerful skills to a related problem, or can be understood as reusing a model of one task in another task. A common implementation of transfer learning is as follows: It is assumed that a domain-invariant feature exists between a source domain (source domain) and a target domain (target domain), that is, aligning data of the source domain (corresponding to the original application scenario) with data of the target domain (corresponding to the new application scenario). Then, an optimal model that can be transferred to the target domain is generated through training based on labeled data of the source domain and a small amount of to-be-trained data of the target domain.

In the method, the data of the source domain needs to be completely aligned with the data of the target domain. However, in an actual situation, deviations may be hidden in the data of the source domain and the data of the target domain. The conventional data processing method can only eliminate explicit deviations, but cannot learn of or eliminate implicit deviations. Consequently, a learned transfer model (a new model transferred to the target domain) is low in accuracy, and the transfer model may be incorrect or transfer learning fails.

Therefore, how to improve accuracy of a transfer model is an urgent problem to be resolved.

**SUMMARY**

This application provides a transfer model training method and apparatus, and a fault detection method and apparatus, to improve accuracy of a transfer model. Therefore, when a fault detection task is executed by using the model, accuracy of fault detection can be improved.

According to a first aspect, a transfer model training method is provided. The method includes: obtaining to-be-processed data, where the to-be-processed data includes unlabeled data from a target domain and labeled data from a source domain; obtaining a plurality of data segments of each dimension of data in the to-be-processed data, where the plurality of data segments are not the same; and training a transfer model based on the plurality of data segments, to obtain a trained transfer model.

In the technical solution of this application, segment division is performed on the to-be-processed data, to obtain both an overall feature of the to-be-processed data and a local feature hidden between the data segments of the to-be-processed data. This can improve accuracy of training data of the transfer model, and further improve accuracy of the transfer model. In other words, the to-be-processed data is divided, to obtain the plurality of data segments that are not the same, and a union set of the data segments can form the original to-be-processed data. Therefore, the data segments carry both the overall feature of the original to-be-processed data and the local feature (for example, a time lag) hidden in the original to-be-processed data. When the model is trained based on the data segments, accuracy of the trained model can be improved. It is assumed that feature extraction is performed on the data segments, to extract the overall feature of the to-be-processed data and the feature (for example, a deviation of the data) hidden between segments. When the model is trained based on features extracted from the data segments, accuracy of the trained model can be improved. For example, it is assumed that the to-be-processed data is time series data, and there may be a data deviation caused by a time lag, different start moments of a trend change, and the like. However, according to the method in this embodiment of this application, after the time series data is divided and feature extraction is performed on the segments obtained through division, the overall feature of the time series data, and the feature, for example, a feature carrying information such as a time lag and a time deviation, hidden between different segments can be obtained. When the model is trained based on the features, impact caused by actual data misalignment (that is, data is not aligned) can be eliminated, and accuracy of the learned new model can be improved.

It should be noted that alignment may be understood as consistency. For example, two groups of data are obtained in a same time period. That data is not aligned means that the two groups of data are explicitly consistent, but a deviation actually exists. For example, although the two groups of data are obtained in a same time period, data change trends of the two groups of data are inconsistent. In other words, start points of data changes are different.

Optionally, the to-be-processed data may include one or more dimensions of to-be-processed data.

Optionally, the to-be-processed data may include to-be-processed data (for example, unlabeled data) from the target domain, and may further include sample data (or data with a label or labeled data) from the source domain. For example, it is assumed that the data is applied to fault detection. The unlabeled data may be understood as data that is not annotated with a fault category, and the sample data, the data with a label, or the labeled data may be understood as fault detection data annotated with a fault category. For another example, it is assumed that the data is applied to weather forecast. The unlabeled data may be understood as data that is not annotated with a weather category, and the sample data may be data annotated with a weather category. The weather category may include one or more categories related to weather, for example, sunny, rainy, snowy, and foggy.

Optionally, the to-be-processed data may be collected in real time by using an obtaining unit, module, or apparatus, or the to-be-processed data may be read from a storage module, unit, or apparatus. In addition, the to-be-processed data may be time series data, or may be non-time series data. This is not limited.

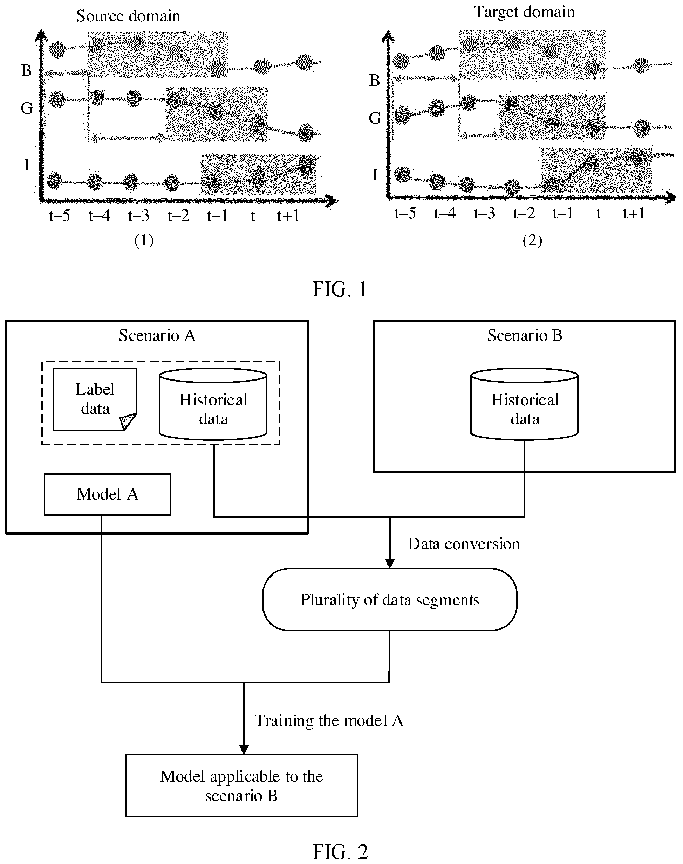

It should be noted that, that the to-be-processed data includes one or more dimensions of to-be-processed data means that the to-be-processed data may include data of one or more parameters, or may be understood as data of one or more dimensions, or data of one or more categories. Each parameter, each dimension, or each category of data may also be understood as each stream of data. FIG. 1 is used as an example. It is equivalent to that blood glucose, insulin, and glucagon respectively correspond to three parameters, three dimensions, or three categories. For another example, in a circuit, one or more dimensions of data may include a current, a voltage, power, a resistance value, a capacitance value, or the like. For another example, in meteorology, one or more dimensions of data may include a temperature, atmospheric pressure, wind, air quality, or the like. For another example, in chemistry, one or more dimensions of data may include composition of a raw material, a raw material ratio, reaction time, a reaction condition, or the like. There is other to-be-processed data other than the foregoing examples, and other examples are not enumerated one by one herein. For brevity of description, in this embodiment of this application, a dimension is used for description. In other words, the to-be-processed data includes one or more dimensions of data.

Optionally, the plurality of data segments obtained through division in this embodiment of this application may have an intersection set, or may not have an intersection set. It should be understood that having an intersection set may also be understood as data overlapping, and data overlapping may be understood as that different data segments have same data. It should further be understood that there is usually no intersection set between data segments of different dimensions in the to-be-processed data, and data segments with an intersection set are usually data segments of a same dimension in the to-be-processed data.

For example, it is assumed that the to-be-processed data has three dimensions of data, represented by first dimension data, second dimension data, and third dimension data. Step 302 is equivalent to performing an operation on each of the three dimensions of data. For example, the first dimension data may be divided into three data segments. The three data segments have an intersection set, two data segments are the same, and a union set of the three data segments is the first dimension data. For another example, the second dimension data may be divided into 10 different data segments. Five data segments have an intersection set, and a union set of the 10 data segments is the second dimension data. For another example, the third dimension data may be divided into eight data segments. Four data segments are different, five data segments have an intersection set, and a union set of the eight data segments is the third dimension data. There is usually no intersection set between the three data segments of the first dimension data and the 10 data segments of the second dimension data, between the three data segments of the first dimension data and the eight data segments of the third dimension data, and between the 10 data segments of the second dimension data and the eight data segments of the third dimension data. It should be noted that the foregoing example is an example of a division method, and does not constitute a limitation on a division manner. In addition, it should be understood that in this embodiment of this application, each dimension of data in the to-be-processed data is divided, to obtain a plurality of data segments that are not the same. It should further be understood that "division" described in this embodiment of this application may include segmenting the to-be-processed data, or may include obtaining the data segments that are not the same. For example, to-be-processed data whose data length is 10 may be divided, to obtain data segments whose lengths range from 1 to 10.

For another example, all data segments may not overlap, or every two data segments of the plurality of data segments of each dimension of data overlap, or only some data segments of the plurality of data segments of each dimension of data overlap.

Optionally, the data segments may be divided by determining a data start point and a data end point of the plurality of data segments based on a data start point and a data end point of the to-be-divided data. For example, the plurality of data segments may have a same data end point, but have different data start points, to obtain impact of different data start points on a result. For another example, the plurality of data segments may have a same data start point, but have different data end points, to obtain impact of different data end points on a result. It is assumed that the to-be-divided data is non-time series data, division is equivalent to that the plurality of data segments overlap, and overlapped data segments may further be set to increase sequentially. For example, it is assumed that the to-be-divided data includes 10 groups of non-time series data, and the 10 groups are numbered 1 to 10 for ease of description. It should be understood that the numbers herein are merely used to distinguish between groups of data, and are not used to set a sequence. In this case, the to-be-divided data may be divided into a plurality of data segments of different lengths that all include a group (for example, a second group). For another example, the to-be-divided data may be divided into a plurality of data segments that are not the same and that all include several groups, for example, a first group and a third group.

It can also be learned from the foregoing examples that, in this embodiment of this application, the to-be-processed data is divided into the plurality of data segments that are not the same, to determine impact of different data segments on a result, or find a data segment that has large impact on a result.

With reference to the first aspect, in some implementations of the first aspect, the to-be-processed data is to-be-processed time series data, the plurality of data segments include a plurality of start time points, and the plurality of start time points are determined based on a start moment and an end moment that correspond to the to-be-processed time series data. Optionally, the plurality of start time points include all moments from the start moment to the end moment. Optionally, an end time point of the plurality of data segments is the end moment corresponding to the to-be-processed time series data.

In other words, when the to-be-divided data is time series data, division may be performed based on the start moment (which is equivalent to an example of the data start point of the to-be-processed data) and the end moment (which is equivalent to an example of the data end point of the to-be-processed data) of the time series data. It should be noted that the time series data is related to a time sequence. Therefore, there is a sequence of moments. The start moment of the time series data may be understood as an earliest moment in corresponding moments of the time series data, and the end moment of the time series data may be understood as a last moment of corresponding moments of the time series data. For example, it is assumed that there are 60 moments in a segment of time series data, and the earliest moment to the last moment are sequentially numbered from a first moment to a $60^{th}$ moment. Therefore, a start moment of the segment of time series data is the first moment, and an end moment is the $60^{th}$ moment. For another example, it is assumed that the first moment corresponds to 7:00 a.m., and the $60^{th}$ moment corresponds to 8:00 a.m. Therefore, the start moment corresponds to 7:00 a.m., and the end moment corresponds to 8:00 a.m.

Optionally, the start time points of the plurality of data segments of the time series data may be determined based on the start moment and the end moment of the time series data, that is, the plurality of data segments include the plurality of start time points. The start time point and the end time point of the data segment are similar to the start moment and the end moment of the to-be-processed time series data, which is equivalent to that the start time point is the earliest moment of the data segment, and the end time point is the last moment of the data segment. Therefore, it can be learned that both the start time point and the end time point need to be between the start moment and the end moment.

For example, it is assumed that the to-be-processed time series data includes data at 10 moments in total, numbered from 1 to 10. A moment 1 is the earliest moment, a moment 2 is a moment later than the moment 1, a moment 9 is a moment later than a moment 8, a moment 10 is the last moment, and the rest can be deduced by analogy. It is assumed that a first data segment includes data at the moment 1 to data at the moment 9, a second data segment includes data at the moment 2 to data at the moment 8, a third data segment includes data at the moment 1 to data at the moment 1, a fourth data segment includes data at the moment 8 to data at the moment 10, and the fifth data segment includes data at the moment 10 to data at the moment 10. The start moment of the to-be-processed time series data is the moment 1, and the end moment is the moment 10. A start time point of the first data segment is the moment 1, and an end time point is the moment 9. A start time point of the second data segment is the moment 2, and an end time point is the moment 8. A start time point of the third data segment is the moment 1, and an end time point is the moment 1. A start time point of the fourth data segment is the moment 8, and an end time point is the moment 10. A start time point of the fifth data segment is the moment 10, and an end time point is the moment 10.

Optionally, it is assumed that the to-be-divided time series data (for example, the to-be-processed time series data) includes data at a moment t-N+1 to data at a moment t, where N is a positive integer. The to-be-divided time series data may be divided as follows:

Optionally, the to-be-processed data may be divided into M segments, where M is a positive integer greater than 1. It should be noted that, it is assumed that M is equal to 1, which is equivalent to that the to-be-divided time series data is not divided, and a value of M may be greater than a value of N. For example, the to-be-divided time series data includes data corresponding to 10 moments, and more than 10 data segments that are not the same may be obtained.

In addition, the to-be-divided time series data may not be sequentially divided.

Optionally, the M segments may all include the data at the moment t, which is equivalent to obtaining data segments from different start time points to the current moment. During subsequent feature extraction, the foregoing division manner may be used to find a key time point (namely, a key start time point), for example, a moment at which a trend of data starts to change in a time series data curve.

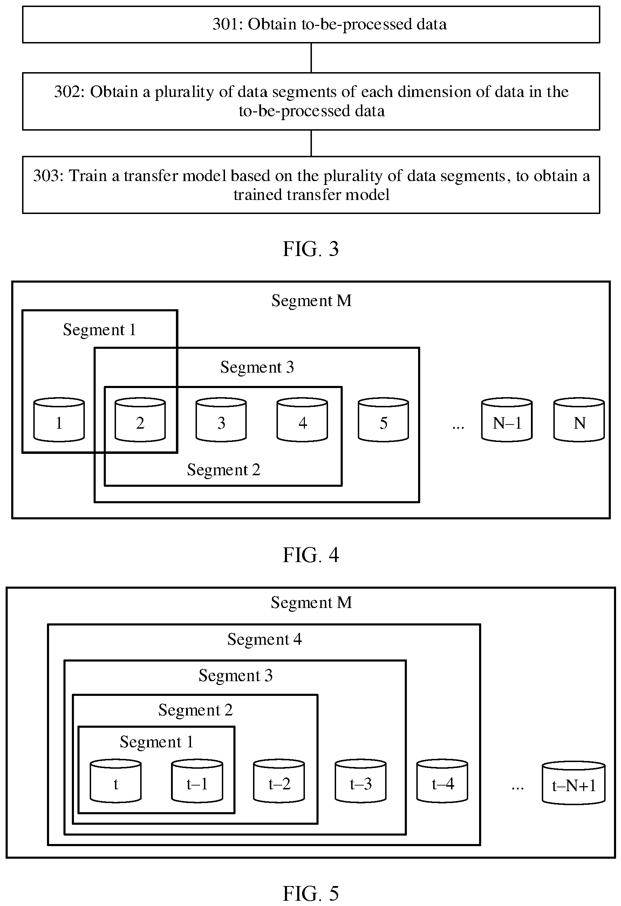

In other words, in the division manner shown in FIG. 5, the plurality of data segments of each dimension of data in the to-be-processed time series data include the plurality of start time points, the start time points include all moments from the start moment to the end moment of each dimension of to-be-processed time series data, and the end time point of the plurality of data segments is the end moment corresponding to the to-be-processed time series data.

Optionally, the to-be-divided data may be divided into N segments that all include the data at the moment t, that is, M is equal to N, to obtain features of data (each data segment starts from different moments) that uses each moment from the moment t-N+1 to the moment t (corresponding to the N segments) as a start point. When the N segments are used for processing, all key time points (moments) from the moment t-N+1 to the moment t can be found. FIG. 1 is used as an example. It is equivalent to finding a moment at which a curve trend changes in FIG. 1, finding a moment that has the greatest impact on the current moment, and the like.

It may be understood that, after the to-be-processed data is divided by using the foregoing method, training data used for training is expanded. This can obtain the overall feature of the to-be-processed data and the local feature hidden between the segments of the to-be-processed data. In other words, the training data is extended, and more features can be obtained from the to-be-processed data.

It should be noted that, in this embodiment of this application, the labeled data of the source domain and the unlabeled data (for example, the plurality of data segments) of the target domain may be used to train a model applicable to the source domain, a model applicable to the target domain, or a model applicable to both the source domain and the target domain. The foregoing several models may be considered as the transfer model in this embodiment of this application. In other words, the transfer model in this embodiment of this application may be any one of the model applicable to the source domain, the model applicable to the target domain, and the model applicable to the source domain and the target domain. A start point (before training) of the transfer model may be a pre-trained model, but does not need to be a trained model applicable to the source domain. For example, it is assumed that the source domain or the target domain has only a corresponding initialized model (not trained), and training may be performed based on the initialized model. In this case, it is equivalent to using the initialized model as an original model (or may be understood as a model before training or a to-be-trained model) of the transfer model, and training the original model of the transfer model based on the plurality of data segments. For another example, it is assumed that the source domain has a trained model or a model applicable to the source domain, and training may be performed based on the model of the source domain. In this case, it is equivalent to using the model of the source domain as an original model of the transfer model, and continuing to train the original model of the transfer model based on the plurality of data segments. For another example, it is assumed that the target domain has a trained model, the model of the target domain may alternatively be used as an original model of the transfer model before training.

In this embodiment of this application, the labeled data of the source domain and the unlabeled data of the target domain are used to train the model, so that performance of a trained model in the source domain is great. In addition, a difference between the source domain and the target domain can be minimized, so that performance of the trained model in the target domain is also great, so as to transfer the trained model to the target domain. It should further be understood that, in this embodiment of this application, the source domain may be understood as a domain that can provide labeled data (sample data), and the target domain may be understood as a domain that can provide unlabeled data. However, in some special cases, both the source domain and the target domain include labeled data, and the method in this embodiment of this application is also applicable, that is, provided that either the source domain or the target domain includes the label data.

Optionally, feature extraction may further be performed on the plurality of data segments. For example, feature extraction is performed by using an LSTM described in the following, to obtain a feature vector/matrix of each dimension of to-be-processed data.

Optionally, after the feature vector/matrix of each dimension of to-be-processed data is obtained, a dependency (or may be understood as a correlation) between feature vectors/matrices of the to-be-processed data may be obtained by using the feature vectors/matrices, which may be understood as obtaining a dependency between different data segments of data of a same dimension. The feature vectors/matrices may also be used to obtain a dependency (or a correlation or an impact weight) between a feature vector/matrix of a dimension of to-be-processed data and a feature vector/matrix of another dimension of to-be-processed data, which may also be understood as obtaining a dependency (or a correlation or an impact weight) between data segments of different dimensions.

With reference to the first aspect, in some implementations of the first aspect, when the transfer model is trained based on the plurality of data segments, a first structure feature between data segments of a same dimension in the plurality of data segments may be obtained, and then the transfer model is trained based on the first structure feature and another feature (including the overall feature and the local feature) extracted from the data segments. The first structure feature may be understood as a correlation (an association relationship) between data segments of data of a same dimension. Optionally, the first structure feature may be determined based on a dependency between the data segments of a same dimension. When applied to fault detection, the first structure feature may be understood as a feature between data segments of fault detection data of a same dimension.

With reference to the first aspect, in some implementations of the first aspect, when the transfer model is trained based on the plurality of data segments, a second structure feature between data segments of different dimensions in the plurality of data segments may further be obtained, and then the transfer model is trained based on the second structure feature and another feature (including the overall feature and the local feature) extracted from the data segments. The second structure feature may be understood as a correlation (an association relationship) between data segments of data of different dimensions. Optionally, the second structure feature may be determined based on a dependency between the data segments of different dimensions. When applied to fault detection, the second structure feature may be understood as a feature between data segments of fault detection data of different dimensions.

With reference to the first aspect, in some implementations of the first aspect, the foregoing two manners may further be combined. In other words, both the first structure feature and the second structure feature are obtained, and both the first structure feature and the second structure feature are used for training. In this manner, the local feature of the to-be-processed data can further be fully extracted. This can improve accuracy of the model obtained through training.

In the foregoing solution in which training is performed based on the first structure feature and/or the second structure feature, the dependency (corresponding to the first structure feature) between the data segments of the to-be-processed data of a same dimension is obtained. This can further optimize training data, and improve accuracy of the transfer model. The dependency (corresponding to the second structure feature) between the data segments of the to-be-processed data of different dimensions is obtained. This can further optimize training data, and improve accuracy of the transfer model. The dependency between the data segments of the to-be-processed data of a same dimension and the dependency between the data segments of the to-be-processed data of different dimensions are obtained and used for training. This can further optimize training data, and improve accuracy of the transfer model.

Optionally, when the transfer model is trained based on the plurality of data segments, a loss function may be established based on a plurality of data segments in the source domain and a plurality of data segments in the target domain, and the transfer model is obtained through establishing and minimizing the loss function of the source domain and the target domain.

Optionally, a loss function of a label may further be obtained through combining structure extraction and structure alignment, and using a structure matrix of a sample as an input of a label predictor. Optionally, a proper evaluation indicator may be selected based on an actual situation. For example, for a classification task, a cross entropy may be used as a category loss, and for a regression task, a root mean square error may be used.

According to a second aspect, a fault detection method is provided. The method includes: obtaining fault detection data, where the fault detection data includes unlabeled fault detection data from a target domain and labeled fault detection data from a source domain, and the labeled fault detection data may be understood as including a fault detection category label and corresponding fault detection data; obtaining a plurality of data segments of each dimension of data in the fault detection data, where the plurality of data segments are not the same; and training a fault detection model based on the plurality of data segments, to obtain a fault detection model corresponding to the target domain.

According to the fault detection method, both an overall feature of the fault detection data and a local feature hidden between the data segments can be obtained. This can improve accuracy of the trained fault detection model.

It should further be noted that the fault detection model may also be a model (an initial model or a pre-trained model) from the source domain, or may be a model (an initial model or a pre-trained model) from the target domain. The trained fault detection model may be a model applicable to the source domain, a model applicable to the target domain, or a model applicable to both the source domain and the target domain.

With reference to the second aspect, in some implementations of the second aspect, the fault detection data is fault detection time series data, the plurality of data segments include a plurality of start time points, and the plurality of start time points are determined based on a start moment and an end moment that correspond to the fault detection time series data.

With reference to the second aspect, in some implementations of the second aspect, the plurality of start time points include all moments from the start moment to the end moment, and an end time point of the plurality of data segments is the end moment corresponding to the fault detection time series data. In this implementation, data segments from different start time points to a current moment (it is assumed that the end moment of the fault detection data is used as the current moment) are obtained. When feature extraction is performed, a key start time point can be found from the data segments, that is, a start time point that affects the current moment can be found, and an impact weight of each start time point can be determined, which is equivalent to extracting more useful features.

With reference to the second aspect, in some implementations of the second aspect, a first structure feature between data segments of a same dimension in the plurality of data segments may be obtained. The first structure feature may be determined based on a dependency between the data segments of a same dimension.

With reference to the second aspect, in some implementations of the second aspect, a second structure feature between data segments of different dimensions in the plurality of data segments may be obtained. The second structure feature is determined based on a dependency between the data segments of different dimensions.

With reference to the second aspect, in some implementations of the second aspect, the fault detection model may be trained based on the first structure feature and/or the second structure feature.

It should be noted that the fault detection method in the second aspect may be considered as actual application of the transfer model training method in the first aspect. Therefore, for brevity, some steps and descriptions are omitted in the fault detection method in the second aspect. It should be understood that technical effects that can be achieved by using the method in the first aspect may also be achieved in the second aspect.

It should further be understood that the method in the first aspect may further be applied to another actual application scenario other than fault detection, for example, weather forecast, chemical reaction detection, and circuit detection. Details are not described herein one by one.

According to a third aspect, a transfer model training apparatus is provided. The apparatus includes modules configured to perform the method in the first aspect.

According to a fourth aspect, a fault detection apparatus is provided. The apparatus includes modules configured to perform the method in the second aspect.

According to a fifth aspect, a transfer model training apparatus is provided. The apparatus includes: a memory, configured to store a program; and a processor, configured to execute the program stored in the memory. When executing the program stored in the memory, the processor is configured to perform the method in the first aspect.

According to a sixth aspect, a fault detection apparatus is provided. The apparatus includes: a memory, configured to store a program; and a processor, configured to execute the program stored in the memory. When executing the program stored in the memory, the processor is configured to perform the method in the second aspect.

According to a seventh aspect, an electronic device is provided. The electronic device includes the transfer model training apparatus in the third aspect.

According to an eighth aspect, an electronic device is provided. The electronic device includes the fault detection apparatus in the fourth aspect.

According to a ninth aspect, a computer-readable storage medium is provided. The computer-readable storage medium stores program code, and the program code includes instructions used to perform steps in the method in the first aspect or the second aspect.

According to a tenth aspect, a computer program product including instructions is provided. When the computer program product is run on a computer, the computer is enabled to perform the method in the first aspect or the second aspect.

According to an eleventh aspect, a chip is provided. The chip includes a processor and a data interface. The processor reads, through the data interface, instructions stored in a memory, to perform the method in the first aspect or the second aspect.

Optionally, in an implementation, the chip may further include the memory. The memory stores the instructions, the processor is configured to execute the instructions stored in the memory, and when executing the instructions, the processor is configured to perform the method in the first aspect or the second aspect.

The chip may specifically be a field programmable gate array FPGA or an application-specific integrated circuit ASIC.

It should be understood that, in this application, the method in the first aspect may specifically refer to the method in any one of the first aspect or the implementations of the first aspect. The method in the second aspect may specifically be the method in any one of the second aspect or the implementations of the second aspect.

## DESCRIPTION OF DRAWINGS

FIG. 1 is a schematic diagram in which data of a source domain is not aligned with data of a target domain;
FIG. 2 is a schematic diagram of a model transfer scenario applicable to an embodiment of this application;
FIG. 3 is a schematic flowchart of a transfer model training method according to an embodiment of this application;
FIG. 4 is a schematic diagram of dividing into data segments according to an embodiment of this application;
FIG. 5 is a schematic diagram of dividing into time series data segments according to an embodiment of this application;
FIG. 6 is a schematic flowchart of a feature extraction method according to an embodiment of this application;
FIG. 7 is a schematic flowchart of obtaining an internal dependency between data of a same dimension according to an embodiment of this application;

FIG. 8 is a schematic flowchart of obtaining an external dependency between data of different dimensions according to an embodiment of this application;

FIG. 9 is a schematic block diagram of a transfer model training apparatus according to an embodiment of this application;

FIG. 10 is a schematic diagram of a hardware structure of a transfer model training apparatus according to an embodiment of this application;

FIG. 11 is a schematic block diagram of a fault detection apparatus according to an embodiment of this application;

FIG. 12 is a schematic diagram of a hardware structure of a fault detection apparatus according to an embodiment of this application; and

FIG. 13 is a schematic diagram of a hardware structure of a chip according to an embodiment of this application.

## DESCRIPTION OF EMBODIMENTS

Solutions of this application may be applied to various application scenarios of transfer learning. The following describes applicable application scenarios by using examples.

Application scenario 1: fault detection

During fault detection, a plurality of devices are usually used to detect a plurality of detection objects. For example, parameters such as reaction time, a raw material category, and a raw material ratio of a chemical reaction tank are detected, and a relationship between different parameters is established. Each chemical reaction tank may be considered as a domain. A detection model of a chemical reaction tank (corresponding to a target domain) may be established by using a detection model of another existing chemical reaction tank (corresponding to a source domain) and detection data of the chemical reaction tank.

For another example, in a telecommunication operation and maintenance network, fault detection data is generated in a telecommunication operation and maintenance process. Each region may be considered as a domain. An operation and maintenance fault detection model, for example, an anomaly detection model of microwave link degradation, of a source region may be trained by using machine learning. When performance of the model in the source region is great, and an operator expects to use the model in another region (a target region), extraction method provided in embodiments of this application may be used to extract an invariant structure between data of the source region and data of the target region, to obtain a structure relationship between a feature of sample data (labeled data) of a source domain (corresponding to the source region) and a feature of unlabeled data of a target domain (corresponding to the target region), where the relationship is for guiding training of a transfer model. Domain-invariant features between the source domain and the target domain are extracted, and an optimal model that can be transferred to the target domain is trained based on the features, the labeled data of the source domain, and a small amount of data of the target domain.

Alternatively, in the foregoing example, each operator may correspond to one domain, and a fault detection model of one operator may be used to train and obtain a fault detection model of another operator.

For ease of understanding, technical terms in embodiments of this application are first described.

Time series data means time series data. The time series data is a data column recorded, in a chronological order, by using a same unified indicator. Data in a same data column needs to be of a same diameter and comparable. The time series data may be a period or a time point. A purpose of time series analysis is to find out statistical characteristics and development regularity of time series in samples, establish a time series model, and perform prediction beyond the samples.

In short, the time series data may be understood as data related to a time sequence, or may be understood as data, for example, a stock trend, a meteorological change, or an industrial process, that varies with time and that may reflect a change by using a value. Non-time series data may be understood as data that is not related to a time sequence.

Source domain and target domain: In embodiments of this application, a model in a scenario is transferred to another scenario by using transfer learning. Therefore, the source domain may be understood as a scenario in which a model is located before transfer, "source" may be understood as original or initial, and "domain" may be understood as a data domain. The target domain may be understood as a new scenario or a target scenario to which the model is to be transferred, a target data domain, or the like. Alternatively, the source domain may be considered as a domain that can provide labeled data, and the target domain may be considered as a domain that can provide unlabeled data. A person skilled in the art may know that a model applicable to the source domain can be trained based on the labeled data of the source domain, but a domain with only unlabeled data cannot be directly trained based on the labeled data. In this case, a model is trained based on the labeled data of the source domain and the unlabeled data of the target domain, so that performance of a trained model in the source domain is great in embodiments of this application. In addition, a difference between the source domain and the target domain can be minimized, so that performance of the trained model in the target domain is also great. However, it is assumed that an unknown deviation may exist, for example, the data of the source domain is not aligned with the data of the target domain, which is equivalent to that the data of the source domain is not completely aligned with the data of the target domain. Consequently, accuracy of the trained model is low, and even training fails.

A data processing method provided in embodiments of this application may be performed by a neural network (model). To better understand the method in embodiments of this application, the following first describes terms and concepts related to the neural network.

(1) Neural network

The neural network may include a neural unit. The neural unit may be an operation unit that uses $x_s$ and an intercept 1 as an input, and an output of the operation unit may be shown in formula (1):

$$h_{W,b}(x) = f(W^T x) = f(\sum_{s=1}^{n} W_s x_s + b) \quad (1)$$

s = 1, 2, ..., or n, n is a natural number greater than 1, $W_s$ is a weight of $x_s$, and b is a bias of the neuron. f is an activation function (activation function) of the neuron, and the activation function is used to perform non-linear transformation on a feature in the neural network, to convert an input signal in the neuron to an output signal. The output signal of the activation function may be used as an input of a next convolutional layer, and the activation function may be a sigmoid function. The neural network is a network constituted by connecting a plurality of single neurons together. To be specific, an output of a neuron may be an input to another neuron. An input of each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network with a plurality of hidden layers. The DNN is divided based on positions of different layers. Neural networks inside the DNN may be classified into three types: an input layer, a hidden layer, and an output layer. Usually, a first layer is the input layer, a last layer is the output layer, and a middle layer is the hidden layer. Layers are fully connected. To be specific, any neuron at an $i^{th}$ layer is necessarily connected to any neuron at an $(i+1)^{th}$ layer.

Although the DNN seems complex, the DNN is actually not complex in terms of work at each layer, and is simply represented as the following linear relationship expression: $\vec{y} = \alpha(W \square \vec{x} + \vec{b})$, where $\vec{x}$ is an input vector, $\vec{y}$ is an output vector, $\vec{b}$ is a bias vector, $W$ is a weight matrix (which is also referred to as a coefficient), and $\alpha()$ is an activation function. At each layer, the output vector $\vec{y}$ is obtained by performing such a simple operation on the input vector $\vec{x}$. Because there are a plurality of layers in the DNN, there are also a plurality of coefficients $W$ and a plurality of bias vectors $\vec{b}$. Definitions of the parameters in the DNN are as follows: The coefficient $W$ is used as an example. It is assumed that in a DNN with three layers, a linear coefficient from the fourth neuron at the second layer to the second neuron at the third layer is defined as $W_{24}^3$. The superscript 3 indicates a layer at which the coefficient $W$ is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^L$.

It should be noted that there is no parameter $W$ at the input layer. In the deep neural network, more hidden layers make the network more capable of describing a complex case in the real world. Theoretically, a model with more parameters has higher complexity and a larger "capacity". It means that the model can complete a more complex learning task. A process of training the deep neural network is a process of learning a weight matrix, and a final objective of training is to obtain weight matrices (weight matrices formed by vectors $W$ at many layers) of all layers of a trained deep neural network.

(3) Convolutional neural network (convolutional neural network, CNN)

The convolutional neural network is a deep neural network with a convolutional structure. The convolutional neural network includes a feature extractor including a convolution layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected to only a part of neurons at a neighboring layer. A convolutional layer usually includes several feature planes, and each feature plane may include some neurons arranged in a rectangle. Neurons of a same feature plane share a weight, and the shared weight herein is a convolution kernel. Weight sharing may be understood as that an image information extraction manner is irrelevant to a location. The convolution kernel may be initialized in a form of a matrix of a random size. In a training process of the convolutional neural network, an appropriate weight may be obtained for the convolution kernel through learning. In addition, a direct benefit brought by weight sharing is that connections between layers of the convolutional neural network are reduced and an overfitting risk is lowered.

(4) Recurrent neural network (recurrent neural network, RNN)

The recurrent neural network is used to process sequence data. In a conventional neural network model, from an input layer to a hidden layer and then to an output layer, the layers are fully connected, and nodes at each layer are not connected. This common neural network resolves many problems, but is still incompetent to resolve many other problems. For example, to predict a next word in a sentence, a previous word usually needs to be used, because adjacent words in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are connected, and an input of the hidden layer not only includes an output of the input layer, but also includes an output of the hidden layer at a previous moment. Theoretically, the RNN can process sequence data of any length. Training of the RNN is the same as training of a conventional CNN or DNN.

Now that there is a convolutional neural network, why is the recurrent neural network required? In the convolutional neural network, there is a premise that elements are independent of each other, and an input and an output are also independent, such as a cat and a dog. However, many elements are interconnected in the real world. For example, stocks change over time. For another example, a person says: I like traveling, my favorite place is Yunnan, and I will go there in the future if there is a chance. Herein, people should know that the person will go to "Yunnan". This is because people can make an inference from a context, but how can a machine do this? The RNN emerges. The RNN is intended to make the machine capable of memorizing like a human. Therefore, an output of the RNN needs to depend on current input information and historical memorized information.

(5) Residual network

A residual network is a deep convolutional network first proposed in 2015. Compared with a conventional convolutional neural network, a residual network is easier to optimize and can enhance accuracy by increasing a larger depth. Essentially, a residual network resolves side effects (deterioration) brought by a depth increase. In this way, network performance can be improved by simply increasing a network depth. A residual network generally includes a plurality of submodules with a same structure. A residual network (residual network, ResNet) plus a number indicates a quantity of times of submodule repetition. For example, ResNet 50 indicates that there are 50 submodules in a residual network.

(6) Classifier

Many neural network structures have a classifier at the end to classify an object in an image. A classifier usually includes a fully connected layer (fully connected layer) and a softmax function (which may be referred to as a normalized exponential function), and can output probabilities of different classes based on input. It should be noted that, in some cases, the softmax function may alternatively be replaced with a sparsemax function (which may be understood as a sparse normalized exponential function).

(7) Loss function

In a process of training a deep neural network, because it is expected that an output of the deep neural network is as close as possible to a value that is actually expected to be predicted, a predicted value of a current network and a target value that is actually expected may be compared, and then, a weight vector of each layer of the neural network is updated based on a difference between the two (certainly, there is usually an initialization process before the first update, to be specific, a parameter is preconfigured for each layer in the deep neural network). For example, if the predicted value of the network is higher, the weight vector is adjusted to obtain a lower predicted value. The weight vector is continuously adjusted until the deep neural network can predict the target value that is actually expected or a value that is very close to the target value that is actually expected. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

(8) Back propagation algorithm

The neural network may correct a value of a parameter in an initial neural network model in a training process by using an error back propagation (back propagation, BP) algorithm, so that an error loss of reconstructing the neural network model becomes increasingly smaller. Specifically, an input signal is transferred forward until an error loss occurs at an output, and the parameter in the initial neural network model is updated based on back propagation error loss information, to make the error loss converge. The back propagation algorithm is a back propagation motion mainly dependent on the error loss, and is used for obtaining parameters of an optimal neural network model, for example, a weight matrix.

(9) Attention mechanism (attention mechanism)

The attention mechanism derives from the study of human vision. In cognitive science, due to the bottleneck of information processing, the human beings selectively focus on a part of all information while ignoring other visible information. The mechanism is usually referred to as an attention mechanism. In the field of artificial intelligence, an objective of the attention mechanism is to find key data from some data, for example, find a key object from an image, find a key image from some images, or find a changing point from some time series data. The attention mechanism mainly evaluates overall contribution, to to-be-processed data, of each data unit or each group of data units in the to-be-processed data, to find a data unit that makes large contribution. Alternatively, the attention mechanism may be understood that key data is determined through comparing impact weights of different data on a result. In the attention mechanism, an attention function is essentially a process of mapping a query (query) to a series of key-value (key-value) pairs, namely, obtaining a series of key-value data pairs.

The attention mechanism may include a self-attention mechanism (self-attention mechanism, SAM) and a referenced attention mechanism (referenced attention mechanism, RAM). The SAM may be understood as finding, from a same group of data, an impact weight of each piece of data on a result, for example, finding key data from the same group of data, or may be understood as an impact weight of vertical (or internal) data. The RAM may be understood as finding, from different groups of data, impact weights of different groups on a result, or finding key data from different groups of data, or may be understood as an impact weight of horizontal (or different groups of) data. It should be noted that the SAM and the RAM may be respectively understood as an intra-group attention mechanism and an inter-group attention mechanism.

In embodiments of this application, a dependency (or a correlation) between data in each dimension of to-be-processed data is mainly extracted by using the SAM, and a dependency (or a correlation) between data in different dimensions of to-be-processed data is extracted by using the RAM.

In the conventional technology, when transfer learning is performed, the model in the source domain continues to be trained based on the data of the target domain and the data of the source domain, to obtain the model in the target domain. However, during actual usage, precision of the new model obtained through transfer learning may be low or even the new model cannot be obtained. In embodiments of this application, a possible cause of this problem is analyzed, and a new method is proposed, to improve accuracy of a transfer model. Through analysis and inference, a main reason why accuracy of the transfer model is low is that there is a deviation between the data of the source domain and the data of the target domain. The data of the source domain and the data of the target domain are explicitly aligned, but are actually not aligned (which may be referred to as that data is not aligned). For example, parameters such as a time lag (which may also be referred to as a delay, a time delay, or a latency) and a time deviation of the source domain may be inconsistent with corresponding parameters of the target domain. Consequently, the data of the source domain and the data of the target domain are actually not aligned. Therefore, when the model is trained based on the data of the target domain and the data of the source domain, an error may be large or even training may fail. In a plurality of actual scenarios, especially in a time series data scenario, data of a source domain is not aligned with data of a target domain. However, a large quantity of tests and data analysis show that structure consistency still exists between the data of the source domain and the data of the target domain, or a specific mapping relationship, correlation, or the like exists. Therefore, in embodiments of this application, the to-be-processed data is divided, to obtain a plurality of data segments that are not the same, and a union set of the data segments can form the original to-be-processed data. Therefore, the data segments carry both an overall feature of the original to-be-processed data and a local feature (for example, a time lag) hidden in the original to-be-processed data. When the model is trained based on the data segments, accuracy of the trained model can be improved. It is assumed that feature extraction is performed on the data segments, to extract the overall feature of the to-be-processed data and the feature (for example, a deviation of the data) hidden between segments. When the model is trained based on features extracted from the data segments, accuracy of the trained model can be improved. For example, it is assumed that the to-be-processed data is time series data, and there may be a data deviation caused by a time lag, different moments of a trend change, and the like. However, according to the method in embodiments of this application, after the time series data is divided and feature extraction is performed on the segments obtained through division, the overall feature of the time series data, and the feature, namely, a feature carrying information such as a time lag and a time deviation, hidden between different segments can be obtained. When the model is trained based on the features, impact caused by actual data misalignment (that is, data is not aligned) can be eliminated, and accuracy of the learned new model can be improved.

It should be noted that alignment may be understood as consistency. For example, two groups of data are obtained in a same time period. That data is not aligned means that the two groups of data are explicitly consistent, but a deviation actually exists. For example, although the two groups of data are obtained in a same time period, data change trends of the two groups of data are inconsistent. In other words, start points of data changes are different. The following describes a case in which data is not aligned with reference to FIG. 1. FIG. 1 is a schematic diagram in which data of a source domain is not aligned with data of a target domain. As shown in FIG. 1, trends of content changes of blood glucose, insulin, and glucagon are used as an example for description. (1) in FIG. 1, namely, the figure on the left, shows content changes of human blood glucose, insulin, and glucagon in a source domain. (2) in FIG. 1, namely, the figure on the right, shows content changes of human blood glucose, insulin, and glucagon in a target domain. For ease of understanding, the source domain and the target domain respectively correspond to two individuals. For example, (1) in FIG. 1 corresponds to Zhang San, and (2) in FIG. 1 corresponds to Li Si. In other words, (1) in FIG. 1 shows a data curve of Zhang San, and (2) in FIG. 1 shows a data curve of Li Si.

For each element in FIG. 1, a horizontal axis is a time axis, and a vertical axis is content values (concentration values) of different parameters. A curve B indicates that a value of human blood glucose concentration varies with time, a curve G indicates that a value of human glucagon concentration varies with time, and a curve I indicates that a value of human insulin concentration varies with time. It can be seen from FIG. 1 that both data of Zhang San and data of Li Si start from a moment t-5 to a moment t+1. In other words, the data of Zhang San and the data of Li Si is explicitly aligned. Based on biological knowledge, when blood glucose concentration increases, insulin concentration and glucagon concentration change accordingly. However, the change has a time delay, and a length of the time delay varies with a human body. In other words, response time of different human bodies to parameter changes at a same moment is different. Therefore, it can be seen from (1) and (2) in FIG. 1 that start points (response start time point) and time lags of the data of Zhang San and the data of Li Si are different. For example, according to an explicit alignment relationship, data B of Zhang San at a moment t-4 to the moment t+1 is actually aligned with data B of Li Si at the moment t-4 to the moment t+1. Actually, it can be seen from the two figures in FIG. 1 that only the data B of Zhang San at the moment t-4 to the moment t+1 is actually aligned with data B of Li Si at a moment t-3 to a moment t. Such actual alignment is a feature hidden between data segments, or may be understood as a local feature. If feature extraction is performed on entire data by using a conventional method, for example, by using an RNN, a correct alignment relationship cannot be obtained, that is, a deviation between data of a source domain and data of a target domain cannot be obtained. In short, although the data of the source domain and the data of the target domain in FIG. 1 are aligned from the moment t-5 to the moment t+1, the data of the source domain and the data of the target domain are not actually aligned. When the data is used to train a model applicable to the target domain, accuracy is low, and transfer may even fail.

It should be noted that FIG. 1 is merely an example provided for better understanding of embodiments of this application, and does not limit the application scope of embodiments of this application.

An embodiment of this application provides a transfer model training method, to resolve the foregoing problem. According to the method, both an overall feature and a local feature of to-be-processed data can be obtained. This can effectively improve accuracy of a transfer model. The following provides descriptions with reference to the accompanying drawings.

FIG. 2 is a schematic diagram of a model transfer scenario applicable to an embodiment of this application. As shown in FIG. 2, a model A may be trained based on historical data of a scenario A, label data, and historical data of a scenario B, to obtain a model applicable to the scenario B. The historical data of the scenario A and the historical data of the scenario B may first be divided through data conversion, to obtain a plurality of overlapped data segments, and then the model A is trained based on the data segments, to obtain the model applicable to the scenario B.

It should be noted that, in the application scenario shown in FIG. 2, the scenario A corresponds to a source domain, and the scenario B corresponds to a target domain. In FIG. 2, a small amount of data of the scenario B can be used to obtain the model applicable to the scenario B.

The application scenario shown in FIG. 2 may be, for example, a fault detection scenario.

FIG. 3 is a schematic flowchart of a transfer model training method according to an embodiment of this application. The following describes steps in FIG. 3.

301: Obtain to-be-processed data.

Optionally, the to-be-processed data may include one or more dimensions of to-be-processed data.

Optionally, the to-be-processed data may include to-be-processed data (for example, unlabeled data) from a target domain, and may further include sample data (or data with a label or labeled data) from a source domain. For example, it is assumed that the data is applied to fault detection. The unlabeled data may be understood as data that is not annotated with a fault category, and the sample data, the data with a label, or the labeled data may be understood as fault detection data annotated with a fault category. For another example, it is assumed that the data is applied to weather forecast. The unlabeled data may be understood as data that is not annotated with a weather category, and the sample data may be data annotated with a weather category. The weather category may include one or more categories related to weather, for example, sunny, rainy, snowy, and foggy.

Optionally, the to-be-processed data may be collected in real time by using an obtaining unit, module, or apparatus, or the to-be-processed data may be read from a storage module, unit, or apparatus. In addition, the to-be-processed data may be time series data, or may be non-time series data. This is not limited.

It should be noted that, that the to-be-processed data includes one or more dimensions of to-be-processed data means that the to-be-processed data may include data of one or more parameters, or may be understood as data of one or more dimensions, or data of one or more categories. Each parameter, each dimension, or each category of data may also be understood as each stream of data. FIG. 1 is used as an example. It is equivalent to that blood glucose, insulin, and glucagon respectively correspond to three parameters, three dimensions, or three categories. For another example, in a circuit, one or more dimensions of data may include a current, a voltage, power, a resistance value, a capacitance value, or the like. For another example, in meteorology, one or more dimensions of data may include a temperature, atmospheric pressure, wind, air quality, or the like. For another example, in chemistry, one or more dimensions of data may include composition of a raw material, a raw material ratio, reaction time, a reaction condition, or the like. There is other to-be-processed data other than the foregoing examples, and other examples are not enumerated one by one herein. For brevity of description, in the following, a dimension is used for description. In other words, the to-be-processed data includes one or more dimensions of data.

302: Obtain a plurality of data segments of each dimension of data in the to-be-processed data.

It should be noted that the plurality of data segments are not the same.

Optionally, a union set of the plurality of data segments may be each dimension of to-be-processed data.

Optionally, at least two groups of data segments in the plurality of data segments may have an intersection set. Having an intersection set may also be understood as data overlapping, and data overlapping may be understood as that different data segments have same data.

It should be understood that there is usually no intersection set between data segments of different dimensions in the to-be-processed data, and data segments with an intersection set are usually data segments of a same dimension in the to-be-processed data.

For example, it is assumed that the to-be-processed data has three dimensions of data, represented by first dimension data, second dimension data, and third dimension data. Step 302 is equivalent to performing an operation on each of the three dimensions of data. For example, the first dimension data may be divided into three data segments. The three data segments have an intersection set, two data segments are the same, and a union set of the three data segments is the first dimension data. For another example, the second dimension data may be divided into 10 different data segments. Five data segments have an intersection set, and a union set of the 10 data segments is the second dimension data. For another example, the third dimension data may be divided into eight data segments. Four data segments are different, five data segments have an intersection set, and a union set of the eight data segments is the third dimension data. There is usually no intersection set between the three data segments of the first dimension data and the 10 data segments of the second dimension data, between the three data segments of the first dimension data and the eight data segments of the third dimension data, and between the 10 data segments of the second dimension data and the eight data segments of the third dimension data. It should be noted that the foregoing example is an example of a division method, and does not constitute a limitation on a division manner. In addition, it should be understood that in this embodiment of this application, each dimension of data in the to-be-processed data is divided, to obtain a plurality of data segments that are not the same. It should further be understood that "division" described in this embodiment of this application may include segmenting the to-be-processed data, or may include obtaining the data segments that are not the same. For example, to-be-processed data whose data length is 10 may be divided, to obtain data segments whose lengths range from 1 to 10.

For another example, all data segments may not overlap, or every two data segments of the plurality of data segments of each dimension of data overlap, or only some data segments of the plurality of data segments of each dimension of data overlap.

The following describes a data segment division method in this embodiment of this application with reference to FIG. 4 and FIG. 5. To-be-divided data in FIG. 4 and FIG. 5 may be the to-be-processed data, and to-be-divided time series data may be understood as a case in which the to-be-processed data is time series data. For another example, when the method is applied to fault detection, the to-be-processed data may specifically be fault detection data, and the to-be-processed time series data may specifically be fault detection time series data.

FIG. 4 is a schematic diagram of dividing into data segments according to an embodiment of this application. As shown in FIG. 4, it is assumed that the to-be-divided data (for example, one dimension of to-be-processed data in the to-be-processed data) includes N pieces of data or N groups of data, and may further be understood as N pieces of unit data, where N is an integer. In FIG. 4, small cylinders are used to represent the N pieces of unit data, that is, each small cylinder represents one piece of unit data. For example, when the to-be-divided data is time series data, each small cylinder may represent one piece of data or one group of data at a moment. When step 302 is performed, the original data may be divided into M data segments: a segment 1 to a segment M, where M is an integer greater than 1.

Optionally, the M data segments may not be the same.

Optionally, data overlapping may exist between at least two data segments in the M data segments. For example, in FIG. 4, the segment 1 includes data 1 and data 2, a segment 2 includes the data 2 to data 4, a segment 3 includes the data 2 to data 5, and the segment M includes the data 1 to data N. It should be noted that FIG. 4 is merely an example of segment division, and a division manner is not limited.

Optionally, the data segments may be divided by determining a data start point and a data end point of the plurality of data segments based on a data start point and a data end point of the to-be-divided data. For example, the plurality of data segments may have a same data end point, but have different data start points, to obtain impact of different data start points on a result. For another example, the plurality of data segments may have a same data start point, but have different data end points, to obtain impact of different data end points on a result. It is assumed that the to-be-divided data is non-time series data, division is equivalent to that the plurality of data segments overlap, and overlapped data segments may further be set to increase sequentially. For example, it is assumed that the to-be-divided data includes 10 groups of non-time series data, and the 10 groups are numbered 1 to 10 for ease of description. It should be understood that the numbers herein are merely used to distinguish between groups of data, and are not used to set a sequence. In this case, the to-be-divided data may be divided into a plurality of data segments of different lengths that all include a group (for example, a second group). For another example, the to-be-divided data may be divided into a plurality of data segments that are not the same and that all include several groups, for example, a first group and a third group.

It can also be learned from the foregoing examples that, in this embodiment of this application, the to-be-processed data is divided into the plurality of data segments that are not the same, to determine impact of different data segments on a result, or find a data segment that has large impact on a result.

Optionally, when the to-be-divided data is time series data, division may be performed based on the start moment (which is equivalent to an example of the data start point of the to-be-processed data) and the end moment (which is equivalent to an example of the data end point of the to-be-processed data) of the time series data. It should be noted that the time series data is related to a time sequence. Therefore, there is a sequence of moments. The start moment of the time series data may be understood as an earliest moment in corresponding moments of the time series data, and the end moment of the time series data may be understood as a last moment of corresponding moments of the time series data. For example, it is assumed that there are 60 moments in a segment of time series data, and the earliest moment to the last moment are sequentially numbered from a first moment to a 60th moment. Therefore, a start moment of the segment of time series data is the first moment, and an end moment is the 60th moment. For another example, it is assumed that the first moment corresponds to 7:00 a.m., and the 60th moment corresponds to 8:00 a.m. Therefore, the start moment corresponds to 7:00 a.m., and the end moment corresponds to 8:00 a.m.

Optionally, the start time points of the plurality of data segments of the time series data may be determined based on the start moment and the end moment of the time series data, that is, the plurality of data segments include the plurality of start time points. The start time point and the end time point of the data segment are similar to the start moment and the end moment of the to-be-processed time series data, which is equivalent to that the start time point is the earliest moment of the data segment, and the end time point is the last moment of the data segment. Therefore, it can be learned that both the start time point and the end time point need to be between the start moment and the end moment.

For example, it is assumed that the to-be-processed time series data includes data at 10 moments in total, numbered from 1 to 10. A moment 1 is the earliest moment, a moment 2 is a moment later than the moment 1, a moment 9 is a moment later than a moment 8, a moment 10 is the last moment, and the rest can be deduced by analogy. It is assumed that a first data segment includes data at the moment 1 to data at the moment 9, a second data segment includes data at the moment 2 to data at the moment 8, a third data segment includes data at the moment 1 to data at the moment 1, a fourth data segment includes data at the moment 8 to data at the moment 10, and the fifth data segment includes data at the moment 10 to data at the moment 10. The start moment of the to-be-processed time series data is the moment 1, and the end moment is the moment 10. A start time point of the first data segment is the moment 1, and an end time point is the moment 9. A start time point of the second data segment is the moment 2, and an end time point is the moment 8. A start time point of the third data segment is the moment 1, and an end time point is the moment 1. A start time point of the fourth data segment is the moment 8, and an end time point is the moment 10. A start time point of the fifth data segment is the moment 10, and an end time point is the moment 10.

Optionally, the to-be-divided time series data (for example, the to-be-processed time series data) may be divided as shown in FIG. 5. FIG. 5 is a schematic diagram of dividing into time series data segments according to an embodiment of this application. As shown in FIG. 5, the to-be-divided time series data includes data at a moment t-N+1 to data at a moment t. The to-be-divided data is divided into several segments.

Optionally, the to-be-processed data may be divided into M segments, where M is a positive integer greater than 1. It should be noted that, it is assumed that M is equal to 1, which is equivalent to that the to-be-divided time series data is not divided, and a value of M may be greater than a value of N. For example, the to-be-divided time series data includes data corresponding to 10 moments, and more than 10 data segments that are not the same may be obtained. In addition, the to-be-divided time series data may not be sequentially divided.

Optionally, the M segments may all include the data at the moment t, which is equivalent to obtaining data segments from different start time points to the current moment. During subsequent feature extraction, the foregoing division manner may be used to find a key time point (namely, a key start time point), for example, a moment at which a trend of data starts to change in a time series data curve.

In other words, in the division manner shown in FIG. 5, the plurality of data segments of each dimension of data in the to-be-processed time series data include the plurality of start time points, the start time points include all moments from the start moment to the end moment of each dimension of to-be-processed time series data, and the end time point of the plurality of data segments is the end moment corresponding to the to-be-processed time series data.

Optionally, the to-be-divided data may be divided into N segments that all include the data at the moment t, that is, M is equal to N, to obtain features of data (each data segment starts from different moments) that uses each moment from the moment t-N+1 to the moment t (corresponding to the N segments) as a start point. When the N segments are used for processing, all key time points (moments) from the moment t-N+1 to the moment t can be found. FIG. 1 is used as an example. It is equivalent to finding a moment at which a curve trend changes in FIG. 1, finding a moment that has the greatest impact on the current moment, and the like.

It may be understood that, after the to-be-processed data is divided by using the method shown in FIG. 4 and/or FIG. 5, training data used for training is expanded. This can obtain the overall feature of the to-be-processed data and the local feature hidden between the segments of the to-be-processed data. In other words, the training data is extended, and more features can be obtained from the to-be-processed data.

303: Train a transfer model based on the plurality of data segments, to obtain a trained transfer model.

It should be noted that, in this embodiment of this application, the labeled data of the source domain and the unlabeled data (for example, the plurality of data segments obtained in step 302) of the target domain may be used to train a model applicable to the source domain, a model applicable to the target domain, or a model applicable to both the source domain and the target domain. The foregoing several models may be considered as the transfer model in this embodiment of this application. In other words, the transfer model in this embodiment of this application may be any one of the model applicable to the source domain, the model applicable to the target domain, and the model applicable to the source domain and the target domain. A start point (before training) of the transfer model may be a pre-trained model, but does not need to be a trained model applicable to the source domain. For example, it is assumed that the source domain or the target domain has only a corresponding initialized model (not trained), and training may be performed based on the initialized model. In this case, it is equivalent to using the initialized model as an original model (or may be understood as a model before training or a to-be-trained model) of the transfer model, and training the original model of the transfer model based on the plurality of data segments. For another example, it is assumed that the source domain has a trained model or a model applicable to the source domain, and training may be performed based on the model of the source domain. In this case, it is equivalent to using the model of the source domain as an original model of the transfer model, and continuing to train the original model of the transfer model based on the plurality of data segments. For another example, it is assumed that the target domain has a trained model, the model of the target domain may alternatively be used as an original model of the transfer model before training.

Optionally, the transfer model may be trained based on some or all of the plurality of data segments, to obtain a trained transfer model.

Optionally, preprocessing such as feature extraction may be first performed on the plurality of data segments, to obtain feature vectors of the plurality of data segments. Optionally, extraction may be performed by using a neural network or a non-neural network. For example, feature extraction may be performed by using a long short-term memory (long short-term memory, LSTM) network.

The LSTM is a time recurrent neural network, and is suitable for processing and predicting important events with a long interval and delay in a time sequence. A difference between the LSTM and an RNN is that a "processor" is added to an algorithm of the LSTM to determine whether information is useful. A structure of the processor is referred to as a cell (cell). One cell includes three gates: an input gate, a forget gate, and an output gate. When information enters the LSTM network, whether the information is useful may be determined according to a rule. Information authorized by the algorithm is kept, and information that is not authorized by the algorithm is forgotten through the forget gate. The LSTM is an effective and universal technology to resolve a problem of long-term dependence.

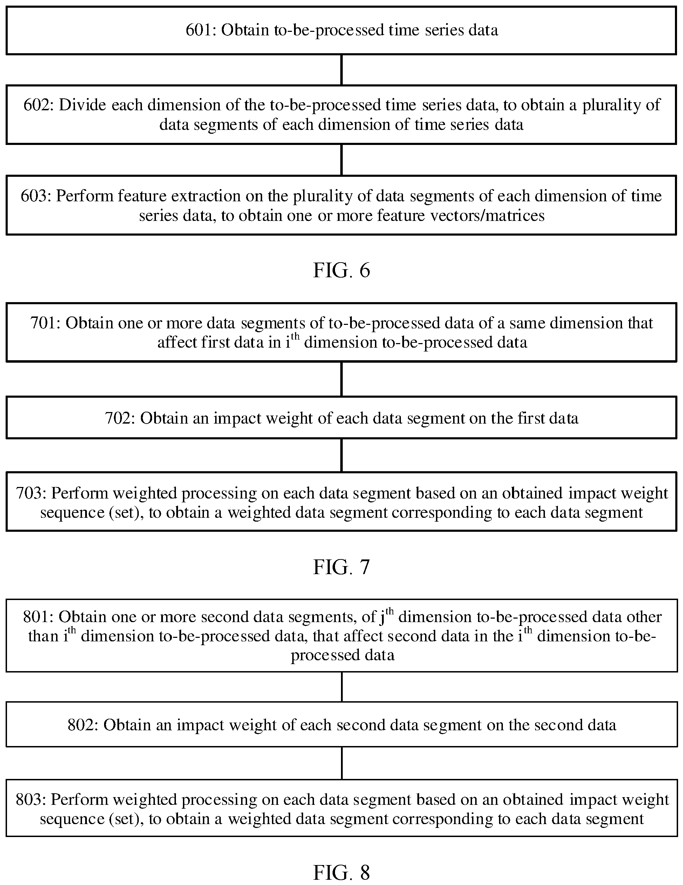

With reference to FIG. 6, the following describes the method for extracting features from the plurality of data segments of each dimension of to-be-processed data by using an example in which feature extraction is performed on time series data by using the LSTM.

FIG. 6 is a schematic flowchart of a feature extraction method according to an embodiment of this application. The following describes steps in FIG. 6.

601: Obtain to-be-processed time series data, where the to-be-processed time series data includes one or more dimensions of to-be-processed time series data.

Optionally, the to-be-processed time series data may be obtained by using the method provided in step 301. It should be noted that the method shown in FIG. 6 is used to extract features from a plurality of data segments. Therefore, the to-be-processed time series data may include to-be-processed time series data from a source domain, or may include to-be-processed time series data from a target domain.

602: Divide each dimension of the to-be-processed time series data, to obtain a plurality of data segments of each dimension of time series data.

Optionally, step 302 may be performed. For example, the method shown in FIG. 5 may be used to obtain the plurality of data segments, namely, $\tilde{x}^i = \{x^i_{t:t}, x^i_{t-1:t}, x^i_{t-2:t}, \cdots, x^i_{t-N+2:t}, x^i_{t-N+1:t}\}$, of each dimension of to-be-processed time series data.

$\tilde{x}^i$ indicates a segment set of ith dimension data of data x, and i is an integer. FIG. 1 is used as an example. Blood glucose, insulin, and glucagon may respectively correspond to 0th dimension data (i=0), first dimension data (i=1), and second dimension data (i=2), or first dimension data (i=1), second dimension data (i=2), and third dimension data (i=3). $x^i_{t:t}$ indicates data segments of the ith dimension data of the data x at a moment t to the moment t, namely, one piece or one group of data at the moment t. $x^i_{t-1:t}$ indicates data segments of the ith dimension data of the data x at a moment t-1 to the moment t, namely, data corresponding to the moment t-1 and data corresponding to the moment t. $x^i_{t-N+2:t}$ indicates data segments of the ith dimension data of the data x at a moment t-N+2 to the moment t, namely, including data at N-1 moments. $x^i_{t-N+1:t}$ indicates data segments of the ith dimension data of the data x at a moment t-N+1 to the moment t, namely, including data at N moments. The rest can be deduced by analogy, and other data segments are not enumerated one by one herein. Segment division is equivalent to that the ith dimension data of the data x at a total of N moments from the moment t-N+1 to the moment t is sequentially divided into N data segments, and each data segment includes the data at the moment t, or equivalent to dividing into data segments of N start time points.

603: Perform feature extraction on the plurality of data segments of each dimension of time series data by using the LSTM, to obtain one or more feature vectors/matrices.

It should be noted that FIG. 6 is described by using the LSTM as an example, but a specific feature extraction method is not limited to the LSTM. Step 603 may alternatively be performed by using another neural network or a non-neural network, provided that features of a plurality of data segments can be extracted. Details are not described herein again.

For ease of understanding, the extracted feature vector/matrix is represented by $h^i_\tau$, where i has a same meaning as that indicated in step 602, and $\tau$ indicates a number of the feature vector/matrix, and corresponds to a length of each data segment in step 602. In other words, a value of $\tau$ ranges from 1 to N. In addition, a step of the feature vector $h^i_\tau$ is T, and a value of T is a quantity of segments obtained through division. Therefore, if the division manner in step 602 is used, the value of T is N.

Optionally, a process of step 603 may be implemented according to a formula $h^i_\tau = f(x^i_{t-\tau+1:t}; \theta^i)$. $f(\cdot)$ may be understood as a function or an LSTM model, $x^i_{t-\tau+1:t}$ may be understood as ith dimension input data or ith dimension data on which feature extraction is to be performed, and $\theta^i$ may be understood as a parameter of an LSTM corresponding to the ith dimension data.

Optionally, the obtained feature vector/matrix may be represented by $h^i = \{h^i_{t-N+1}, h^i_{t-N+2}, \cdots, h^i_{t-1}, h^i_t\}$. $h^i$ indicates a set of feature vectors/matrices extracted from each data segment of the ith dimension to-be-processed time series data, and each variable in $\{h_{t-N+1}^{i}, h_{t-N+2}^{i}, \cdots, h_{t-1}^{i}, h_{t}^{i}\}$ indicates a feature vector/matrix extracted from each data segment of the $i^{th}$ dimension to-be-processed time series data.

When the method shown in FIG. 6 is applied to non-time series data, the to-be-processed time series data in FIG. 6 is correspondingly replaced with non-time series data. Details are not described herein again.

In the method shown in FIG. 6, both an overall feature and a local feature can be extracted from to-be-processed time series data. Therefore, information such as a time lag hidden between segments can be extracted. When the extracted feature vector/matrix is applied to model training, higher accuracy can be obtained.

Optionally, after the feature vector/matrix of each dimension of to-be-processed data is obtained, a dependency (or may be understood as a correlation) between feature vectors/matrices of the to-be-processed data may be obtained by using the feature vectors/matrices, which may be understood as obtaining a dependency between different data segments of data of a same dimension. The feature vectors/matrices may also be used to obtain a dependency (or a correlation or an impact weight) between a feature vector/matrix of a dimension of to-be-processed data and a feature vector/matrix of another dimension of to-be-processed data, which may also be understood as obtaining a dependency (or a correlation or an impact weight) between data segments of different dimensions.

Optionally, when the transfer model is trained based on the plurality of data segments, a first structure feature between data segments of a same dimension in the plurality of data segments may be obtained, and then the transfer model is trained based on the first structure feature and another feature (including the overall feature and the local feature) extracted from the data segments. The first structure feature may be understood as a correlation (an association relationship) between data segments of data of a same dimension. Optionally, the first structure feature may be determined based on a dependency between the data segments of a same dimension. For example, an impact weight between the data segments of data of a same dimension may be obtained by using the method shown in FIG. 7. When applied to fault detection, the first structure feature may be understood as a feature between data segments of fault detection data of a same dimension.

Optionally, when the transfer model is trained based on the plurality of data segments, a second structure feature between data segments of different dimensions in the plurality of data segments may be obtained, and then the transfer model is trained based on the second structure feature and another feature (including the overall feature and the local feature) extracted from the data segments. The second structure feature may be understood as a correlation (an association relationship) between data segments of data of different dimensions. Optionally, the second structure feature may be determined based on a dependency between the data segments of different dimensions. For example, an impact weight between the data segments of data of different dimensions may be obtained by using the method shown in FIG. 8. When applied to fault detection, the second structure feature may be understood as a feature between data segments of fault detection data of different dimensions.

Optionally, the foregoing two manners may further be combined. In other words, both the first structure feature and the second structure feature are obtained, and both the first structure feature and the second structure feature are used for training. In this manner, the local feature of the to-be-processed data can further be fully extracted. This can improve accuracy of the model obtained through training.

With reference to FIG. 7 and FIG. 8, the following describes, by using an attention mechanism as an example, a method for obtaining an internal dependency of data of a same dimension and an external dependency of data of different dimensions. It should be noted that the internal dependency of the data of a same dimension is a dependency between different data segments of the data of a same dimension in each dimension of to-be-processed data, and the external dependency of the data of different dimensions is a dependency between data segments of the data of different dimensions in each dimension of to-be-processed data.

FIG. 7 is a schematic flowchart of obtaining an internal dependency between data of a same dimension according to an embodiment of this application. The following describes steps in FIG. 7.

701: Obtain one or more data segments of to-be-processed data of a same dimension that affect first data in $i^{th}$ dimension to-be-processed data.

It should be noted that the first data may be understood as a piece of data in the $i^{th}$ dimension data in the to-be-processed data, or a future predicted value of the $i^{th}$ dimension data. i is an integer, and indicates a dimension number of the to-be-processed data. For example, it is assumed that there are N dimensions of to-be-processed data in total, N is a positive integer, and that i=1, 2, ..., N may be used for numbering, or that i=0, 1, 2, ..., N-1 may be used for numbering.

702: Obtain an impact weight of each data segment on the first data.

Optionally, step 701 and step 702 may be performed by using a self-attention mechanism.

Optionally, the impact weight of the to-be-processed data of a same dimension on the first data may be obtained by using the following formula:

EP 4 131 069 A1

$$u_\tau^i = \frac{1}{N} \sum_{k=1}^{N} \frac{(h_\tau^i W^{Q,i})(h_k^i W^{K,i})}{\sqrt{d_h}} \quad (2)$$

$u_\tau^i$ indicates an impact weight of a $\tau^{th}$ feature vector/matrix corresponding to the ith dimension data, N indicates a total quantity of data segments, $h_\tau^i$ indicates a $\tau^{th}$ feature vector/matrix corresponding to the ith dimension data, $W^{Q,i}$ indicates a query mapping matrix corresponding to the ith dimension data, $W^{K,i}$ indicates a key mapping matrix corresponding to the ith dimension data, the query mapping matrix and the key mapping matrix are matrices related to the self-attention mechanism, and $\sqrt{d_h}$ indicates a scale factor, and is also understood as a dimension of the mapping matrix.

Optionally, a softmax function that needs to be used may be replaced with a sparsemax function, to obtain a sparse impact weight set $\alpha^i = \{\alpha_1^i, \alpha_2^i, \cdots, \alpha_N^i\}$. $\alpha_1^i, \alpha_2^i, \cdots, \alpha_N^i$ respectively indicate impact weights of N data segments, N is a positive integer, and i is an integer, and indicates a dimension number of the to-be-processed data. For convenience, i may be set to a positive integer. It may be understood that, in the sparse weight set, an impact weight of each data segment on the first data can be obtained. However, when a data segment actually does not affect the first data, an impact weight corresponding to the data segment is 0. It is assumed that impact weight sequences of a plurality of groups of data are obtained, that is, obtaining impact weight sequences of other data other than an impact weight sequence of the first data, so that dimensions of all impact weight sequences can be consistent, and impact weights of all data segments can be determined. For example, a data segment that does not affect the first data corresponds to an impact weight of 0. For example, it is assumed that the first data is one data segment, a corresponding impact weight is 1.

703: Perform weighted processing on each data segment based on the obtained impact weight sequence (set), to obtain a weighted data segment corresponding to each data segment.

When each value in a data segment obtains impact weight sequences of other data segments of a same dimension on the data segment, a dependency, a correlation, or an impact weight between the data segment and the other data segments of a same dimension may be obtained.

It is assumed that the to-be-processed data in FIG. 7 is time series data, and impact of a past value of data of a same dimension on a future value can be obtained by using the method shown in FIG. 7. It is equivalent to that the first data is a data segment corresponding to a first moment, and the first moment is a moment in all moments corresponding to the time series data. The time series data and non-time series data are processed in different manners. Time series data is sequential. Usually, only data at a previous moment affects data at a later moment, but data at a later moment does not affect data at a previous moment. In other words, a past value affects a future value, but a future value does not affect a past value. Therefore, for the particularity of the time series data, after the first data is determined, only impact of data before the first data on the first data may be considered, and data after the first data does not need to be considered. For example, it is assumed that a moment corresponding to the first data is t, only impact of data at a moment before the moment t on the data at the moment t needs to be considered, and data at a moment t+1 and a moment after the moment t+1 does not need to be considered.

It is assumed that processing shown in FIG. 7 is performed on data segments, obtained by using the division manner shown in FIG. 5, of the ith dimension data at a moment t and a total of N moments before the moment t as start time points. The first data may be determined as data at the moment t in the ith dimension data or data at a moment t+1 in the ith dimension data, which is equivalent to traversing the moment t and the N moments before the moment t, to obtain impact weights on the first data when the N moments are start time points. Therefore, all key start time points can be found.

FIG. 8 is a schematic flowchart of obtaining an external dependency between data of different dimensions according to an embodiment of this application. The following describes steps in FIG. 8.

801: Obtain one or more second data segments, of jth dimension to-be-processed data other than ith dimension to-be-processed data, that affect second data in the ith dimension to-be-processed data.

It should be noted that i and j are integers, and indicate a dimension number of the to-be-processed data. For example, it is assumed that there are N dimensions of to-be-processed data in total, N is a positive integer, and that i=1, 2, ..., N may be used for numbering, or that i=0, 1, 2, ..., N-1 may be used for numbering. In this case, i and j have a same value range, and indicate the N dimensions of to-be-processed data. Therefore, i and j are used to distinguish to-be-processed data of different dimensions, namely, a case in which i is not equal to j.

802: Obtain an impact weight of each second data segment on the second data.

Optionally, the impact weight of each second data segment on the second data may be obtained by using an attention mechanism (for example, a RAM).

Optionally, a softmax function that needs to be used may be replaced with a sparsemax function, to obtain a sparse impact weight set $e^i = \{e_1^{i,1}, \cdots, e_N^{i,1}, e_1^{i,2}, \cdots, e_N^{i,2}, \cdots, e_1^{i,P}, \cdots, e_N^{i,P}\}$. $e_1^{i,1}$ indicates an impact weight between a first data segment of the $i^{th}$ dimension to-be-processed data and a first data segment of first dimension to-be-processed data. $e_N^{i,1}$ indicates an impact weight between an $N^{th}$ data segment of the $i^{th}$ dimension to-be-processed data and an $N^{th}$ data segment of the first dimension to-be-processed data. $e_1^{i,2}$ indicates an impact weight between the first data segment of the $i^{th}$ dimension to-be-processed data and a first data segment of second dimension to-be-processed data. $e_N^{i,2}$ indicates an impact weight between the $N^{th}$ data segment of the $i^{th}$ dimension to-be-processed data and an $N^{th}$ data segment of the second dimension to-be-processed data. $e_1^{i,P}$ indicates an impact weight between the first data segment of the $i^{th}$ dimension to-be-processed data and a first data segment of P* dimension to-be-processed data. $e_N^{i,P}$ indicates an impact weight between the $N^{th}$ data segment of the $i^{th}$ dimension to-be-processed data and an $N^{th}$ data segment of the $P^{th}$ dimension to-be-processed data. The rest can be deduced by analogy. P is a positive integer, and indicates a dimension of to-be-processed data.

It should be noted that the method shown in FIG. 8 is mainly used to obtain a dependency between data of a current dimension and data of another dimension. Therefore, a dependency between the data of a current dimension and the data of a current dimension does not need to be obtained at the same time. Therefore, in the impact weight sequence (set), it is equivalent that $e_1^{i,i}, \cdots, e_N^{i,i}$ does not need to be obtained. For example, when i=1, $e_1^{1,1}, \cdots, e_N^{1,1}$ does not need to be obtained. However, it should be understood that impact of the solution in FIG. 8 is not affected regardless of whether $e_1^{i,i}, \cdots, e_N^{i,i}$ is obtained, but operation overheads can be reduced when calculation is not performed.

It should be understood that, in the sparse weight set, an impact weight between every two data segments in all data segments of to-be-processed data of different dimensions can be obtained. However, when a data segment actually does not affect the data, an impact weight corresponding to the data segment is 0.

803: Perform weighted processing on each data segment based on the obtained impact weight sequence (set), to obtain a weighted data segment corresponding to each data segment.

It is assumed that the to-be-processed data in FIG. 8 is time series data, and impact of a past value of data of a dimension on a future value of data of another dimension can be obtained by using the method shown in FIG. 8. For convenience, for the particularity of the time series data, after second data in the $i^{th}$ dimension data is determined, only impact of data of another dimension before a moment corresponding to the second data on the second data may be considered, and data after the second data does not need to be considered. For example, it is assumed that the moment corresponding to the second data is t, only impact of data of another dimension at each moment before the moment t on the $i^{th}$ dimension data at the moment t needs to be considered, and data of another dimension at a moment t+1 and a moment after the moment t+1 does not need to be considered.

It is assumed that processing shown in FIG. 8 is performed on data segments, obtained by using the division manner shown in FIG. 5, of each dimension of data at a moment t and a total of N moments before the moment t as start time points. The second data may be determined as data at the moment t in the $i^{th}$ dimension data (data of a dimension in each dimension of data) or data at a moment t+1 in the $i^{th}$ dimension data, which is equivalent to find an impact weight of each data segment of $j^{th}$ dimension data other than the $i^{th}$ dimension data on the second data. Therefore, impact weights of data segments of data of another dimension (another dimension other than a first dimension) on the second data in data of a current dimension (the $i^{th}$ dimension) can be found. It may be understood that impact of a past value of another dimension on a future value of a current dimension may be obtained.

By using the method shown in FIG. 7 or FIG. 8, a dependency between data segments of to-be-processed data of a same dimension or a dependency between data segments of data of different dimensions can be obtained. The method in FIG. 7 and the method in FIG. 8 may be combined. When both the method in FIG. 7 and the method FIG. 8 are used, a dependency between data segments of to-be-processed data of a same dimension and a dependency between data segments of data of different dimensions can be obtained.

Optionally, when the transfer model is trained based on the plurality of data segments in step 303, a loss function may be established based on a plurality of data segments in the source domain and a plurality of data segments in the target domain, and the transfer model is obtained through establishing and minimizing the loss function of the source domain and the target domain.

Optionally, a formula $\Gamma_x = \{\tilde{\gamma}^1, \tilde{\gamma}^2, \cdots, \tilde{\gamma}^M\}$ may be used to indicate a structure matrix of a sample x (to-be-processed data), where M is a positive integer, and indicates numbers of M data segments of the to-be-processed data x. In this case, a maximum mean discrepancy (maximum mean discrepancy, MMD) may be used as a loss function for alignment:

$$L_S = \left\| \frac{1}{|X_S|} \sum_{x_S \in X_S} \Gamma_{x_S} - \frac{1}{|X_T|} \sum_{x_T \in X_T} \Gamma_{x_T} \right\| \quad (3)$$

A subscript S indicates a source domain (source domain), and a subscript T indicates a target domain (target domain). In other words, quantities with a subscript S are quantities corresponding to the source domain, and quantities with a subscript T are quantities corresponding to the target domain. For example, Xs indicates a sample set including a sample $x_S$ in the source domain, $X_T$ indicates a sample set including a sample $x_T$ in the target domain, and $\Gamma_{x_S}$ and $\Gamma_{x_T}$ respectively indicate a structure matrix of the sample x in the source domain and a structure matrix of the sample x in the target domain. In other words, it is equivalent to establishing and minimizing a loss function, to obtain a corresponding result, or equivalent to establishing an optimal classifier by using a label classifier (label classifier) and data of the source domain after feature extraction. Then, a structure loss value corresponding to each dimension of feature obtained through feature extraction is determined by using the MMD loss function, and a structure corresponding to a minimum loss value is selected as a final structure.

Optionally, a loss function of a label may further be obtained through combining structure extraction and structure alignment, and using a structure matrix of a sample as an input of a label predictor. Optionally, a proper evaluation indicator may be selected based on an actual situation. For example, for a classification task, a cross entropy may be used as a category loss, and for a regression task, a root mean square error (root mean square error, RMSE) may be used. Details are not described herein.

Optionally, a final target function may be obtained according to the following formula:

$$L(\Theta, \mathbf{W}^Q, \mathbf{W}^K, \phi) = L_y + \omega L_s \quad (4)$$

$\omega$ is a hyperparameter for weighing two losses, $\Theta = \{\theta^1, \theta^2, \cdots, \theta^M\}$ is an LSTM parameter of all features, $\mathbf{W}^Q$, $\mathbf{W}^K$ are the mapping matrices described above, $\phi$ indicates a parameter of the label predictor, and $L_y$ and $L_s$ respectively indicate a difference between an original loss function (which may also be understood as an initial loss function or the like) of the source domain and the source domain, and a different between the original loss function and the target domain. In other words, an MMD loss value is used as a penalty (penalty) value, and is added to a learning loss function of a task in the source domain, to minimize the learning loss function of the source domain, and minimize the MMD loss value, so as to obtain a final result.

According to the target function, a training process of the model in the source domain and the target domain may be represented by using the following formula:

$$(\Theta, \mathbf{W}^Q, \mathbf{W}^K, \phi) = \arg \min_{\Theta, \mathbf{W}^Q, \mathbf{W}^K, \phi} L(\Theta, \mathbf{W}^Q, \mathbf{W}^K, \phi) \quad (5)$$

It can be learned from the process and the formula that if the method provided in embodiments of this application is used to obtain a plurality of data segments of to-be-processed data and then perform training, accuracy of a training result of a transfer model can be effectively improved. In particular, when a structure relationship between data segments of a same dimension and a structure relationship between data segments of different dimensions are comprehensively considered, training precision can further be improved.

In embodiments of this application, labeled data of the source domain and unlabeled data of the target domain are used to train the model, so that performance of a trained model in the source domain is great. In addition, a difference between the source domain and the target domain can be minimized, so that performance of the trained model in the target domain is also great, so as to transfer the trained model to the target domain. It should further be understood that, in embodiments of this application, the source domain may be understood as a domain that can provide labeled data (sample data), and the target domain may be understood as a domain that can provide unlabeled data. However, in some special cases, both the source domain and the target domain include labeled data, and the method in this embodiment of this application is also applicable, that is, provided that either the source domain or the target domain includes the label data.

In the method shown in FIG. 3, segment division is performed on the to-be-processed data, and feature extraction is performed on the data segments, to obtain both an overall feature of the to-be-processed data and a local feature hidden between the data segments of the to-be-processed data. This can improve accuracy of training data of the transfer model, and further improve accuracy of the transfer model. By using the method shown in FIG. 7, the dependency (corresponding to the first structure feature) between the data segments of the to-be-processed data of a same dimension is obtained. This can further optimize training data, and improve accuracy of the transfer model. By using the method shown in FIG. 8, the dependency (corresponding to the second structure feature) between the data segments of the to-be-processed data of different dimensions is obtained. This can further optimize training data, and improve accuracy of the transfer model. If the method shown in FIG. 7 and the method shown in FIG. 8 are used, the dependency between the data segments of the to-be-processed data of a same dimension and the dependency between the data segments of the to-be-processed data of different dimensions are obtained. This can further optimize training data, and improve accuracy of the transfer model.

Optionally, the transfer model training method provided in embodiments of this application may be applied to fault detection. In other words, fault detection is equivalent to an actual application scenario of the method. The method may also be applied to another scenario, for example, weather forecast. Details are not described herein.

The following describes a fault detection method. For brevity, repeated descriptions are omitted. For omitted parts, refer to related descriptions of the transfer model training method.

Optionally, fault detection data may be obtained. The fault detection data includes unlabeled fault detection data from a target domain and labeled fault detection data from a source domain, and the labeled fault detection data includes a fault type label and corresponding fault detection data. Then, a plurality of data segments of each dimension of data in the fault detection data are obtained. The plurality of data segments are not the same. Then, a fault detection model is trained based on the plurality of data segments, to obtain a trained fault detection model.

It should be noted that the fault detection model may also be a model (an initial model or a pre-trained model) from the source domain, or may be a model (an initial model or a pre-trained model) from the target domain. The trained fault detection model may be a model applicable to the source domain, a model applicable to the target domain, or a model applicable to both the source domain and the target domain.

In this solution, both an overall feature of the fault detection data and a local feature hidden between the data segments can be obtained. This can improve accuracy of the trained fault detection model.

Optionally, the fault detection data may also be time series data, and a plurality of time series data segments may also be obtained by using the method. Details are not described herein again.

Optionally, a first structure feature between data segments of a same dimension in the plurality of data segments and a second structure feature between data segments of different dimensions may also be obtained by using the method. Details are not described herein again.

When the fault detection model is trained by using the first structure feature and/or the second structure feature, accuracy of the trained fault detection model can be improved.

The foregoing describes in detail the transfer model training method in embodiments of this application with reference to the accompanying drawings. The following describes a transfer model training apparatus in embodiments of this application with reference to the accompanying drawings. It should be understood that the transfer model training apparatus described in the following can perform steps of the transfer model training method in embodiments of this application. To avoid unnecessary repetition, the following appropriately omits repeated descriptions when describing the transfer model training apparatus in embodiments of this application.

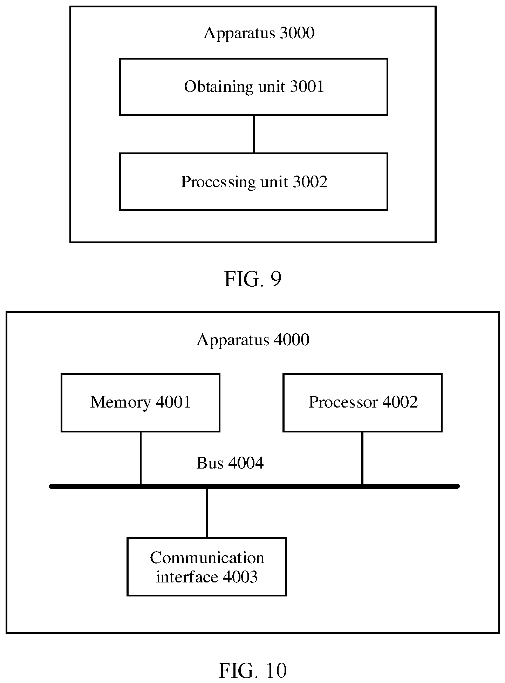

FIG. 9 is a schematic block diagram of a transfer model training apparatus according to an embodiment of this application. As shown in FIG. 9, an apparatus 3000 includes an obtaining unit 3001 and a processing unit 3002.

The obtaining unit 3001 and the processing unit 3002 may be configured to perform the transfer model training method in embodiments of this application.

For example, the obtaining unit 3001 may perform step 301, and the processing unit 3002 may perform step 302 and/or step 303. For another example, the obtaining unit 3001 may perform step 601, and the processing unit 3002 may perform step 602 and step 603. When step 303 is performed, the method shown in FIG. 7 and/or FIG. 8 may further be used for processing. In this case, the processing unit 3002 may perform step 701 to step 703, and/or may perform step 801 to step 803.

The processing unit 3002 may be divided into a plurality of modules based on different processing functions. Specifically, the processing unit 3002 may include a feature extraction module and a training module. The feature extraction module may be configured to divide to-be-processed data into a plurality of data segments. For example, step 302 may be performed. The training module is configured to perform training based on the plurality of data segments, to obtain a transfer model, that is, configured to perform step 303. Optionally, the processing unit 3002 may further include a structure extraction module, configured to obtain a first structure feature and/or a second structure feature, that is, configured to obtain a dependency between different data segments of data of a same dimension, and/or configured to obtain a dependency between data segments of data of different dimensions, for example, configured to perform steps in FIG. 7 and/or FIG. 8.

FIG. 10 is a schematic diagram of a hardware structure of a transfer model training apparatus according to an embodiment of this application. As shown in FIG. 10, an apparatus 4000 (the apparatus 4000 may specifically be a computer device) includes a memory 4001, a processor 4002, a communication interface 4003, and a bus 4004. Communication connections between the memory 4001, the processor 4002, and the communication interface 4003 are implemented through the bus 4004.

The memory 4001 may be a read-only memory (read-only memory, ROM), a static storage device, a dynamic storage device, or a random access memory (random access memory, RAM). The memory 4001 may store a program. When executing the program stored in the memory 4001, the processor 4002 is configured to perform steps of the transfer model training method in embodiments of this application.

The processor 4002 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the transfer model training method in the method embodiments of this application.

The processor 4002 may alternatively be an integrated circuit chip and has a signal processing capability. In an implementation process, the steps of the transfer model training method in this application may be completed by using a hardware integrated logic circuit or an instruction in a form of software in the processor 4002.

The processor 4002 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 4001. The processor 4002 reads information in the memory 4001, and completes, in combination with hardware of the processor 4002, a function that needs to be executed by a unit included in the transfer model training apparatus in embodiments of this application, or performs the transfer model training method in the method embodiments of this application.

The communication interface 4003 uses a transceiver apparatus, for example but not for limitation, a transceiver, to implement communication between the apparatus 4000 and another device or a communication network.

The bus 4004 may include a path for transmitting information between the components (for example, the memory 4001, the processor 4002, and the communication interface 4003) of the apparatus 4000.

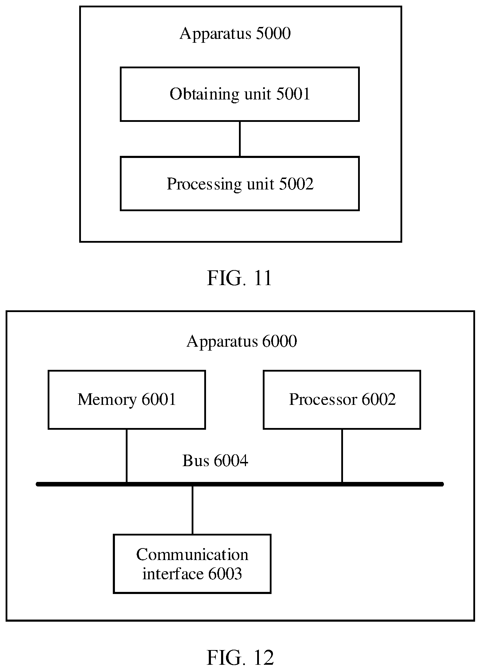

FIG. 11 is a schematic block diagram of a fault detection apparatus according to an embodiment of this application. As shown in FIG. 11, an apparatus 5000 includes an obtaining unit 5001 and a processing unit 5002.

The obtaining unit 5001 and the processing unit 5002 may be configured to perform the fault detection method in embodiments of this application. It should be noted that, in embodiments of this application, the fault detection method is equivalent to an actual application of the transfer model training method in embodiments of this application. Therefore, any transfer model training method in embodiments of this application may be applied to fault detection.

For example, the obtaining unit 5001 may be configured to obtain fault detection data. The fault detection data may include unlabeled fault detection data from a target domain and labeled fault detection data from a source domain, and the labeled fault detection data may include a fault type label and corresponding fault detection data. The processing unit 5002 may be configured to obtain a plurality of data segments of each dimension of data in the fault detection data. The plurality of data segments are not the same. The processing unit 5002 may further be configured to train a fault detection model based on the plurality of data segments, to obtain a trained fault detection model.

Optionally, the fault detection data may be time series data or non-time series data. It is assumed that the fault detection data is time series data, the plurality of data segments include a plurality of start time points, and the plurality of start time points are determined based on a start moment and an end moment that correspond to the fault detection time series data.

Optionally, the plurality of start time points may include all moments from the start moment corresponding to the fault detection time series data to the end moment corresponding to the fault detection time series data.

Optionally, an end time point of the plurality of data segments may be determined as the end moment corresponding to the fault detection time series data.

Optionally, the processing unit 5002 may further be configured to obtain a first structure feature between data segments of a same dimension in the plurality of data segments. Optionally, the first structure feature may be determined based on a dependency between the data segments of a same dimension.

Optionally, the processing unit 5002 may further be configured to obtain a second structure feature between data segments of different dimensions in the plurality of data segments. Optionally, the second structure feature may be determined based on a dependency between the data segments of different dimensions.

Optionally, the fault detection model in a source domain may be trained based on the first structure feature and/or the second structure feature.

Optionally, the processing unit 5002 may be divided into a plurality of modules based on different processing functions. Specifically, the processing unit 5002 may include a feature extraction module and a training module. The feature extraction module may be configured to divide the fault detection data into the plurality of data segments. The training module is configured to perform training based on the plurality of data segments, to obtain a transfer model. Optionally, the processing unit 5002 may further include a structure extraction module, configured to obtain the first structure feature and/or the second structure feature, that is, configured to obtain the dependency between different the data segments of data of a same dimension, and/or configured to obtain the dependency between the data segments of data of different dimensions.

FIG. 12 is a schematic diagram of a hardware structure of a fault detection apparatus according to an embodiment of this application. As shown in FIG. 12, an apparatus 6000 includes a memory 6001, a processor 6002, a communication interface 6003, and a bus 6004. Communication connections between the memory 6001, the processor 6002, and the communication interface 6003 are implemented through the bus 6004.

The memory 6001 may be a ROM, a static storage device, a dynamic storage device, or a RAM. The memory 6001 may store a program. When executing the program stored in the memory 6001, the processor 6002 is configured to perform steps of the fault detection method in embodiments of this application.

The processor 6002 may be a general-purpose CPU, a microprocessor, an ASIC, a GPU, or one or more integrated circuits, and is configured to execute a related program, to implement the fault detection method in the method embodiments of this application.

The processor 6002 may be an integrated circuit chip and has a signal processing capability. In an implementation process, the steps of the transfer model training method in this application may be completed by using a hardware integrated logic circuit or an instruction in a form of software in the processor 6002.

The foregoing processor 6002 may alternatively be a general-purpose processor, a DSP, an ASIC, an FPGA or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 6001. The processor 6002 reads information in the memory 6001, and completes, in combination with hardware of the processor 6002, a function that needs to be executed by a unit included in the fault detection apparatus in embodiments of this application, or performs the fault detection method in the method embodiments of this application.

The communication interface 6003 uses a transceiver apparatus, for example but not for limitation, a transceiver, to implement communication between the apparatus 6000 and another device or a communication network.

The bus 6004 may include a path for transmitting information between the components (for example, the memory 6001, the processor 6002, and the communication interface 6003) of the apparatus 6000.

It should be noted that, although only the memory, the processor, and the communication interface are shown in each of the apparatus 4000 and the apparatus 6000, in a specific implementation process, a person skilled in the art should understand that the apparatus 4000 and the apparatus 6000 each may further include another component necessary for normal running. In addition, based on a specific requirement, a person skilled in the art should understand that the apparatus 4000 and the apparatus 6000 each may further include a hardware component for implementing another additional function. In addition, a person skilled in the art should understand that the apparatus 4000 and the apparatus 6000 each may include only components necessary for implementing embodiments of this application, but not necessarily include all the components shown in FIG. 10 and FIG. 12.

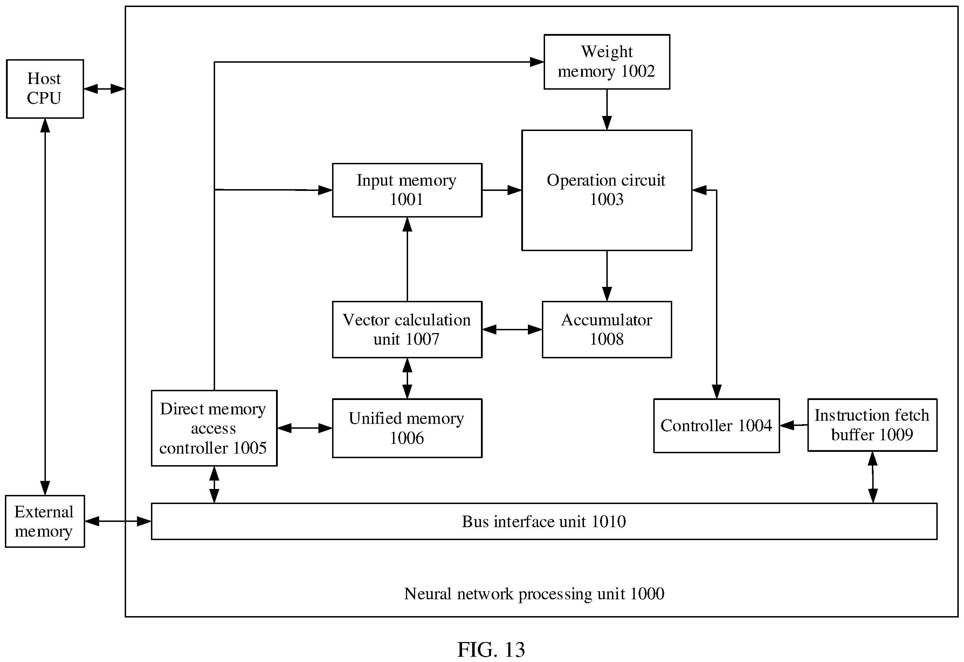

FIG. 13 is a schematic diagram of a hardware structure of a chip according to an embodiment of this application. As shown in FIG. 13, the chip includes a neural network processing unit 1000. The chip may be disposed in any one or more of the following apparatuses or systems:

the apparatus 3000 shown in FIG. 9, the apparatus 4000 shown in FIG. 10, the apparatus 5000 shown in FIG. 11, and the apparatus 6000 shown in FIG. 12.

Any method shown in the method embodiments may be implemented by the chip shown in FIG. 13.

The neural network processing unit 1000 serves as a coprocessor, and is disposed on a host central processing unit (Host CPU). The host CPU assigns a task. A core part of the neural network processing unit 1000 is an operation circuit 1003. A controller 1004 controls the operation circuit 1003 to obtained data from a memory (a weight memory 1002 or an input memory 1001) and perform an operation.

In some implementations, the operation circuit 1003 includes a plurality of processing engines (processing engine, PE) inside. In some implementations, the operation circuit 1003 is a two-dimensional systolic array. The operation circuit 1003 may alternatively be a one-dimensional systolic array or another electronic circuit capable of performing mathematical operations such as multiplication and addition. In some implementations, the operation circuit 1003 is a general-purpose matrix processor.

For example, it is assumed that there is an input matrix A, a weight matrix B, and an output matrix C. The operation circuit 1003 fetches, from the weight memory 1002, data corresponding to the matrix B, and caches the data on each PE in the operation circuit 1003. The operation circuit 1003 fetches data of the matrix A from the input memory 1001, to perform a matrix operation on the matrix B, and stores an obtained partial result or an obtained final result of the matrix in an accumulator (accumulator) 1008.

A vector calculation unit 1007 may perform further processing such as vector multiplication, vector addition, an exponent operation, a logarithm operation, or value comparison on an output of the operation circuit 1003. For example, the vector calculation unit 1007 may be configured to perform network calculation, such as pooling (pooling), batch normalization (batch normalization), or local response normalization (local response normalization) at a non-convolutional/non-FC layer in a neural network.

In some implementations, the vector calculation unit 1007 can store a processed output vector in a unified memory (or may be referred to as a unified cache) 1006. For example, the vector calculation unit 1007 may apply a non-linear function to an output, for example, a vector of an accumulated value, of the operation circuit 1003 to generate an activation value. In some implementations, the vector calculation unit 1007 generates a normalized value, a combined value, or both a normalized value and a combined value. In some implementations, the processed output vector can be used as an activated input to the operation circuit 1003, for example, the processed output vector can be used at a subsequent layer of the neural network.

The method in the method embodiment may be performed by 1003 or 1007.

A unified memory 1006 is configured to store input data and output data.

For weight data, a direct memory access controller (direct memory access controller, DMAC) 1005 directly transfers input data in an external memory to the input memory 1001 and/or the unified memory 1006, stores weight data in the external memory in the weight memory 1002, and stores data in the unified memory 1006 in the external memory.

A bus interface unit (bus interface unit, BIU) 1010 is configured to implement interaction between the host CPU, the DMAC, and an instruction fetch buffer 1009 by using a bus.

The instruction fetch buffer (instruction fetch buffer) 1009 connected to the controller 1004 is configured to store an instruction used by the controller 1004.

The controller 1004 is configured to invoke the instruction cached in the instruction fetch buffer 1009, to control a working process of an operation accelerator.

In embodiments of this application, the data may be to-be-processed image data.

Usually, the unified memory 1006, the input memory 1001, the weight memory 1002, and the instruction fetch buffer 1009 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Unless otherwise defined, all technical and scientific terms used in this specification have same meanings as that usually understood by a person skilled in the art of this application. The terms used in the specification of this application are merely for the purpose of describing specific embodiments, and are not intended to limit this application.

It should be noted that various numerals such as first, second, third, or fourth in this specification are merely used for differentiation for ease of description, and are not used to limit the scope of embodiments of this application.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A transfer model training method, comprising:

    obtaining to-be-processed data, wherein the to-be-processed data comprises unlabeled data from a target domain and labeled data from a source domain;
    obtaining a plurality of data segments of each dimension of data in the to-be-processed data, wherein the plurality of data segments are not the same; and
    training a transfer model based on the plurality of data segments, to obtain a trained transfer model.

2. The method according to claim 1, wherein the to-be-processed data is to-be-processed time series data, the plurality of data segments comprise a plurality of start time points, and the plurality of start time points are determined based on a start moment and an end moment that correspond to the to-be-processed time series data.

3. The method according to claim 2, wherein that the plurality of start time points are determined based on a start moment and an end moment that correspond to the to-be-processed time series data comprises:

    the plurality of start time points comprise all moments from the start moment to the end moment; and
    an end time point of the plurality of data segments is the end moment corresponding to the to-be-processed time series data.

4. The method according to any one of claims 1 to 3, wherein the training a transfer model based on the plurality of data segments comprises:

    obtaining a first structure feature between data segments of a same dimension in the plurality of data segments, wherein the first structure feature is determined based on a dependency between the data segments of a same dimension; and
    training the transfer model based on the first structure feature.

5. The method according to any one of claims 1 to 4, wherein the training a transfer model based on the plurality of data segments comprises:

    obtaining a structure feature between data segments of different dimensions in the plurality of data segments, wherein the second structure feature is determined based on a dependency between the data segments of different dimensions; and

training the transfer model based on the second structure feature.

6. A fault detection method, comprising:

obtaining fault detection data, wherein the fault detection data comprises unlabeled fault detection data from a target domain and labeled fault detection data from a source domain, and the labeled fault detection data comprises a fault type label and corresponding fault detection data;

obtaining a plurality of data segments of each dimension of data in the fault detection data, wherein the plurality of data segments are not the same; and

training a fault detection model based on the plurality of data segments, to obtain a trained fault detection model.

7. The method according to claim 6, wherein the fault detection data is fault detection time series data, the plurality of data segments comprise a plurality of start time points, and the plurality of start time points are determined based on a start moment and an end moment that correspond to the fault detection time series data.

8. The method according to claim 7, wherein that the plurality of start time points are determined based on a start moment and an end moment that correspond to the fault detection time series data comprises:

the plurality of start time points comprise all moments from the start moment to the end moment; and

an end time point of the plurality of data segments is the end moment corresponding to the fault detection time series data.

9. The method according to any one of claims 6 to 8, wherein the training a fault detection model based on the plurality of data segments comprises:

obtaining a first structure feature between data segments of a same dimension in the plurality of data segments, wherein the first structure feature is determined based on a dependency between the data segments of a same dimension; and

training the fault detection model based on the first structure feature.

10. The method according to any one of claims 6 to 9, wherein the training a fault detection model based on the plurality of data segments comprises:

obtaining a structure feature between data segments of different dimensions in the plurality of data segments, wherein the second structure feature is determined based on a dependency between the data segments of different dimensions; and

training the fault detection model based on the second structure feature.

11. A transfer model training apparatus, comprising:

an obtaining unit, configured to obtain to-be-processed data, wherein the to-be-processed data comprises unlabeled data from a target domain and labeled data from a source domain; and

a processing unit, configured to obtain a plurality of data segments of each dimension of data in the to-be-processed data, wherein the plurality of data segments are not the same, wherein

the processing unit is further configured to train a transfer model based on the plurality of data segments, to obtain a trained transfer model.

12. The apparatus according to claim 11, wherein the to-be-processed data is to-be-processed time series data, the plurality of data segments comprise a plurality of start time points, and the plurality of start time points are determined based on a start moment and an end moment that correspond to the to-be-processed time series data.

13. The apparatus according to claim 12, wherein that the plurality of start time points are determined based on a start moment and an end moment that correspond to the to-be-processed time series data comprises:

the plurality of start time points comprise all moments from the start moment to the end moment; and

an end time point of the plurality of data segments is the end moment corresponding to the to-be-processed time series data.

**14.** The apparatus according to any one of claims 11 to 13, wherein the processing unit is specifically configured to:

obtain a first structure feature between data segments of a same dimension in the plurality of data segments, wherein the first structure feature is determined based on a dependency between the data segments of a same dimension; and
train the transfer model based on the first structure feature.

**15.** The apparatus according to any one of claims 11 to 14, wherein the processing unit is specifically configured to:

obtain a second structure feature between data segments of different dimensions in the plurality of data segments, wherein the second structure feature is determined based on a dependency between the data segments of different dimensions; and
train the transfer model based on the second structure feature.

**16.** A fault detection apparatus, comprising:

an obtaining unit, configured to obtain fault detection data, wherein the fault detection data comprises unlabeled fault detection data from a target domain and labeled fault detection data from a source domain, and the labeled fault detection data comprises a fault type label and corresponding fault detection data; and
a processing unit, configured to obtain a plurality of data segments of each dimension of data in the fault detection data, wherein the plurality of data segments are not the same, wherein
the processing unit is further configured to train a fault detection model based on the plurality of data segments, to obtain a trained fault detection model.

**17.** The apparatus according to claim 16, wherein the fault detection data is fault detection time series data, the plurality of data segments comprise a plurality of start time points, and the plurality of start time points are determined based on a start moment and an end moment that correspond to the fault detection time series data.

**18.** The apparatus according to claim 17, wherein that the plurality of start time points are determined based on a start moment and an end moment that correspond to the fault detection time series data comprises:

the plurality of start time points comprise all moments from the start moment to the end moment; and
an end time point of the plurality of data segments is the end moment corresponding to the fault detection time series data.

**19.** The apparatus according to any one of claims 16 to 18, wherein the processing unit is specifically configured to:

obtain a first structure feature between data segments of a same dimension in the plurality of data segments, wherein the first structure feature is determined based on a dependency between the data segments of a same dimension; and
train the fault detection model based on the first structure feature.

**20.** The apparatus according to any one of claims 16 to 19, wherein the processing unit is specifically configured to:

obtain a second structure feature between data segments of different dimensions in the plurality of data segments, wherein the second structure feature is determined based on a dependency between the data segments of different dimensions; and
train the fault detection model based on the second structure feature.

**21.** A computer-readable storage medium, wherein the computer-readable medium stores program code used by a device for execution, and the program code comprises instructions used to perform the method according to any one of claims 1 to 10.

**22.** A chip, wherein the chip comprises a processor and a data interface, and the processor reads, through the data interface, instructions stored in a memory, to perform the method according to any one of claims 1 to 10.

**23.** A computer program product, comprising a computer program/instructions, wherein when the computer program/instructions is/are executed by a processor, steps of the method according to any one of claims 1 to 10 are implemented.

Source domain

Target domain

(1)

(2)

FIG. 1

Scenario A

Label data

Historical data

Model A

Scenario B

Historical data

Data conversion

Plurality of data segments

Training the model A

Model applicable to the scenario B

FIG. 2

| 301: Obtain to-be-processed data |
| --- |

| 302: Obtain a plurality of data segments of each dimension of data in the to-be-processed data |
| --- |

| 303: Train a transfer model based on the plurality of data segments, to obtain a trained transfer model |
| --- |

FIG. 3

Segment M

Segment 1

Segment 3

1　　2　　3　　4　　5　　...　　N–1　　N

Segment 2

FIG. 4

Segment M

Segment 4

Segment 3

Segment 2

Segment 1

t　　t–1　　t–2　　t–3　　t–4　　...　　t–N+1

FIG. 5

601: Obtain to-be-processed time series data

602: Divide each dimension of the to-be-processed time series data, to obtain a plurality of data segments of each dimension of time series data

603: Perform feature extraction on the plurality of data segments of each dimension of time series data, to obtain one or more feature vectors/matrices

FIG. 6

701: Obtain one or more data segments of to-be-processed data of a same dimension that affect first data in $i^{th}$ dimension to-be-processed data

702: Obtain an impact weight of each data segment on the first data

703: Perform weighted processing on each data segment based on an obtained impact weight sequence (set), to obtain a weighted data segment corresponding to each data segment

FIG. 7

801: Obtain one or more second data segments, of $j^{th}$ dimension to-be-processed data other than $i^{th}$ dimension to-be-processed data, that affect second data in the $i^{th}$ dimension to-be-processed data

802: Obtain an impact weight of each second data segment on the second data

803: Perform weighted processing on each data segment based on an obtained impact weight sequence (set), to obtain a weighted data segment corresponding to each data segment

FIG. 8

Apparatus 3000

Obtaining unit 3001

Processing unit 3002

FIG. 9

Apparatus 4000

Memory 4001

Processor 4002

Bus 4004

Communication
interface 4003

FIG. 10

Apparatus 5000

Obtaining unit 5001

Processing unit 5002

FIG. 11

Apparatus 6000

Memory 6001

Processor 6002

Bus 6004

Communication
interface 6003

FIG. 12

Instruction fetch buffer 1009

Controller 1004

Weight memory 1002

Operation circuit 1003

Accumulator 1008

Input memory 1001

Vector calculation unit 1007

Unified memory 1006

Direct memory access controller 1005

Bus interface unit 1010

Neural network processing unit 1000

Host CPU

External memory

FIG. 13

| | | |
|---|---|---|
| **INTERNATIONAL SEARCH REPORT** | International application No. | |
| | **PCT/CN2021/086001** | |

**A.    CLASSIFICATION OF SUBJECT MATTER**

G06K 9/62(2006.01)i

According to International Patent Classification (IPC) or to both national classification and IPC

**B.      FIELDS SEARCHED**

Minimum documentation searched (classification system followed by classification symbols)

G06K; G06N

Documentation searched other than minimum documentation to the extent that such documents are included in the fields searched

Electronic data base consulted during the international search (name of data base and, where practicable, search terms used)

CNPAT, WPI, EPODOC, IEEE, CNKI, GOOGLE: 迁移学习, 迁移模型, 片段, 多, 维, 时间, 时序, 时刻, 结构, transfer learning, transfer model, fragment, data, multipl+, dimension, time, sequence, structure, AM, attention mechanism

**C.      DOCUMENTS CONSIDERED TO BE RELEVANT**

| Category* | Citation of document, with indication, where appropriate, of the relevant passages | Relevant to claim No. |
|---|---|---|
| PX | CN 111612035 A (HUAWEI TECHNOLOGIES CO., LTD.) 01 September 2020 (2020-09-01) claims 1-24 | 1-23 |
| A | CN 110849627 A (HARBIN UNIVERSITY OF SCIENCE AND TECHNOLOGY) 28 February 2020 (2020-02-28) description, paragraphs [0031]-[0035] | 1-23 |
| A | CN 109376620 A (NORTH CHINA ELECTRIC POWER UNIVERSITY) 22 February 2019 (2019-02-22) entire document | 1-23 |
| A | CN 108898218 A (ALIBABA GROUP HOLDING LIMITED) 27 November 2018 (2018-11-27) entire document | 1-23 |
| A | WO 2020009652 A1 (TELEFONAKTIEBOLAGET LM ERICSSON) 09 January 2020 (2020-01-09) entire document | 1-23 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 May 2021** | **26 May 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/086001**

| Patent document cited in search report | | | Publication date (day/month/year) | Patent family member(s) | Publication date (day/month/year) |
|---|---|---|---|---|---|
| CN | 111612035 | A | 01 September 2020 | None | |
| CN | 110849627 | A | 28 February 2020 | None | |
| CN | 109376620 | A | 22 February 2019 | None | |
| CN | 108898218 | A | 27 November 2018 | None | |
| WO | 2020009652 | A1 | 09 January 2020 | None | |

Form PCT/ISA/210 (patent family annex) (January 2015)

**REFERENCES CITED IN THE DESCRIPTION**

**Patent documents cited in the description**

- CN 202010308439